# EUROPÄISCHE PATENTSCHRIFT

(11) **EP 3 759 760 B1**
(45) Veröffentlichungstag und Bekanntmachung des Hinweises auf die Patenterteilung: **02.03.2022**
(21) Anmeldenummer: 20721499.0
(22) Anmeldetag: 22.04.2020
(51) Int. Cl.: H01M 8/2404, H01M 10/04, H01M 8/241

(54) **VORRICHTUNG UND VERFAHREN ZUM HERSTELLEN EINES ZELLSTAPELS**
DEVICE AND METHOD FOR PRODUCING A CELL STACK
DISPOSITIF ET PROCÉDÉ DE FABRICATION D'UN EMPILEMENT DE CELLULES

(30) Priorität: 23.04.2019 DE 102019110472
(43) Veröffentlichungstag der Anmeldung: 06.01.2021
(73) Patentinhaber: Grob-Werke GmbH & Co. KG, 87719 Mindelheim (DE)
(72) Erfinder: SCHEB, Thomas, 72805 Lichtenstein-Unterhausen (DE); PAUL, Jürgen, 87739 Loppenhausen (DE); KÜHN, Wolfgang, 86825 Bad Wörishofen (DE); GLÜCK, Moritz, 82362 Weilheim (DE)
(74) Vertreter: KASTEL Patentanwälte PartG mbB
(86) Internationale Anmeldenummer: PCT/EP2020/061123
(87) Internationale Veröffentlichungsnummer: WO 2020/216758

(56) Entgegenhaltungen:
- EP-A1- 0 561 069
- EP-A1- 1 689 015
- EP-A2- 0 327 208
- WO-A1-2015/065082

## Beschreibung

Die Erfindung betrifft eine Vorrichtung zum Herstellen eines Zellstapels, welcher eine Mehrzahl an Zellverbünden und/oder Lagen aufweist, sowie ein Verfahren zum Betreiben der erfindungsgemäßen Vorrichtung zum Herstellen eines Zellstapels.

Der Produktionsprozess einer Lithium-Ionen-Batteriezelle umfasst vier Hauptprozessschritte. Die Hauptprozessschritte umfassen eine Elektrodenfertigung, eine Zellassemblierung, eine Formation und Aging. Unabhängig von den verschiedenen Zellformen - zylindrische Zellen, Hard-Case Zellen oder Pouch-Zellen - besteht die kleinste Einheit jeder Lithium-Ionen-Zelle aus zwei Elektroden mit einer Anode und einer Kathode und einem Separator, der die Elektroden, also die Anode und die Kathode, voneinander trennt. Die Kathode kann dabei umlaufend zum Beispiel ungefähr 1 mm kleiner sein, wie die Anode. Der Separator ist das größte Teil einer Batteriezelle und ist umlaufend ungefähr 1 mm größer als die Anode.

Für die Fertigung von Batteriezellen sind zahlreiche Verfahren bekannt, unter anderem Wickeln, Rollen oder Stapeln. Zur Fertigung einer Batteriezelle wird vorliegend ein Stapelvorgang durchgeführt, bei dem die einzelnen Elektroden inklusive Separator in mehreren Schichten übereinandergestapelt werden, bis eine gewünschte Zellkapazität erreicht ist. Bei diesem Prozessschritt wird eine exakte Positionierung der Elektroden - Kathode und Anode - gefordert. Um die genaue Position der Elektroden halten zu können, werden diese Komponenten in verschiedenen Reihenfolgen - aufeinanderfolgend Separator, Anode, Separator, Katode oder Separator, Katode, Separator, Anode - miteinander verklebt und/oder laminiert. Um nun einen kompletten Zellstapel aus vielen einzelnen Schichten oder laminierten und/oder geklebten Zellverbünden herzustellen, werden diese automatisch über ein Handling und einen Vakuumgreifer auf eine Position gesetzt, die mittels einer Bildverarbeitung überprüft wird. Diese Assemblierung bedarf Werkstückträger mit integrierten Niederhaltern, die die einzelnen Zellverbünde nach dem Auflegen übereinander in der Position fixieren.

In der DE 10 2016 213 149 A1 ist ein Verfahren zur Herstellung einer Elektrodeneinheit für eine Batteriezelle beschrieben. Bei dem Verfahren wird eine Vielzahl von Lagen einer Anode, Lagen einer Katode und Lagen eines Separators in einer Stapelrichtung zu einem Lagenstapel gestapelt. Anschließend wird der Lagenstapel derart angeordnet, dass die Stapelrichtung geneigt zu einer vertikalen Richtung verläuft. In einem weiteren Verfahrensschritt wird der Lagenstapel gerüttelt bis mindestens eine Kante einer Vielzahl von Lagen der Anode, der Katode und des Separators an mindestens einem Anschlag anliegt. Schließlich wird der Lagenstapel mechanisch fixiert.

In der EP 1 689 015 A1 ist eine Vorrichtung zu Ausrichten eines Brennstoffzellenstapels offenbart. Dabei wird der Brennstoffzellenstapel zwischen zwei Backen eingespannt. Zusätzlich gibt es mehrere Führungsschienen. Eine der Führungsschiene ist mit einem Vibrator verbunden, der dazu dient, die Komponenten des Zellstapels auszurichten bzw. zu zentrieren.

In der EP 0 561 069 A1 ist eine Vorrichtung zum Ausrichten eines Batteriezellstapels offenbar, die zwei bewegliche Positioniereinrichtungen sowie eine von dieser Bewegung entkoppelten Träger aufweist. Die Positioniereinrichtungen werden unabhängig voneinander bewegt.

Die EP 0 327 208 A2 offenbart eine Vorrichtung zum Ausrichten eines Batteriezellstapels, die einen Träger sowie Positionierbacken aufweist. Eine Positionierbacke ist mittels eines Aktuators bewegbar.

Die WO 2015/065082 A1 offenbart Vorrichtungen zum Zentrieren eines Batteriezellstapels, die Blöcke, welche bewegbar sind und einen Zellstapel einfassen können, und eine von der Bewegung entkoppelte Grundplatte besitzen. Bei einer Ausgestaltung sind die Blöcke in der oberen Hälfte abgeschrägt, um die Aufnahme von Komponenten für die Zellstapel zu erleichtern. Bei einigen Ausgestaltungen ist ein Vibrator in eine Grundplatte eingelassen, bei anderen sind Vibratoren in die Blöcke eingelassen. Es ist eine Vorrichtung zum Herstellen eines Zellstapels, welcher eine Mehrzahl an Zellverbünden und/oder Lagen aufweist, offenbart, wobei die Vorrichtung Positioniereinheiten, die alle beweglich sind und den Stapel einfassen, und einen Träger aufweist, der von der Bewegung entkoppelt ist.

Die Erfindung hat sich zur Aufgabe gestellt, eine verbesserte Vorrichtung und ein verbessertes Verfahren zum Herstellen eines Zellstapels bereitzustellen, mittels welchem ein Zellstapel auf besonders einfache, zuverlässige und schnelle, insbesondere für die Serienfertigung, Art und Weise hergestellt werden kann.

Zum Lösen dieser Aufgabe schafft die Erfindung eine Vorrichtung zum Herstellen eines Zellstapels sowie ein Verfahren zum Betreiben einer Vorrichtung zum Herstellen eines Zellstapels mit den Merkmalen der unabhängigen Patentansprüche. Vorteilhafte Ausgestaltungen mit zweckmäßigen und nicht trivialen Weiterbildungen der Erfindung sind in den abhängigen Patentansprüchen angegeben.

Die Erfindung schafft eine Vorrichtung zum Herstellen eines Zellstapels, welcher eine Mehrzahl an Zellverbünden und/oder eine Mehrzahl an Lagen aufweist. Ein "Zellverbund" weist insbesondere mehrere elektrisch leitfähige Elemente, insbesondere eine Kathode und/oder eine Anode, und zumindest ein elektrisch isolierendes Element auf. Bei dem Zellverbund oder den Zellverbünden kann es sich um einen Zellverbund oder Zellverbünden einer Batterie handeln. Alternativ kann ein Zellverbund auch mehrere elektrisch isolierende Elemente aufweisen. Mit "Lagen" sind insbesondere einzelne oder vereinzelte Lagen mehrerer elektrisch leitfähiger Elemente, insbesondere einer Kathode und/oder einer Anode, und/oder elektrisch isolierender Elemente gemeint. Bei dem elektrisch isolierenden Element kann es sich beispielsweise um einen Isolator, welcher auch als Separator bezeichnet werden kann, handeln. Bei den Lagen kann es sich beispielsweise um Lagen einer Brennstoffzelle oder einer Batterie handeln. Beispielsweise können die Lagen einer Brennstoffzelle eine oder mehrere Bipolar-Platten und/oder Lagen einer Membran-Elektroden-Anordnung umfassen. Ein Brennstoffzellen-Stack kann aus einzelnen Lagen gebildet werden. Die Lagen des Brennstoffzellen-Stacks, insbesondere die Bipolarplatte oder -platten und/oder Membran-Elektroden-Anordnung, sind unterschiedlich groß. Die Lagen des Brennstoffzellen-Stacks weisen bevorzugt geometrisch gleiche Merkmale auf, die zum Ausrichten der unterschiedlich großen Lagen dienen.

Bevorzugt weist ein Zellverbund und/oder weisen die Lagen jeweils aufeinander und aneinander angeordnet zumindest zwei elektrisch leitfähige Elemente und zwei elektrisch isolierende Elemente auf. Eines der elektrisch leitfähigen Elemente kann als Kathode und das andere elektrisch leitfähige Element als Anode ausgebildet sein. Beispielsweise können in einem jeweiligen Zellverbund und/oder die Lagen aufeinanderfolgend ein Separator, eine Anode, ein Separator und eine Kathode oder ein Separator, eine Kathode, ein Separator und eine Anode aneinander angeordnet oder gestapelt sein. Bei dem Zellstapel sind insbesondere mehrere Zellverbünde und/oder Lagen aneinander, insbesondere in eine Hochrichtung der Vorrichtung, oder aufeinander angeordnet oder gestapelt.

Eine Batteriezelle umfasst insbesondere zumindest einen Separator, eine Anode und eine Katode. Dabei ist der Separator bevorzugt größer als die Anode und/oder die Katode oder bildet das größte Bauteil im Vergleich zur Anode und zur Katode aus. Insbesondere bildet der Separator bevorzugt flächenmäßig das größte Bauteil, sodass dieser umlaufend größer als die Anode und die Katode ist. Bevorzugt ist die Anode größer als die Katode. Zusätzlich können die Elektroden noch ein Kontaktfähnchen aufweisen. Um eine funktionsfähige Batteriezelle zu erhalten, sind die Lagen der Batteriezelle in einer fest vorgegebenen Reihenfolge aneinander angeordnet oder gestapelt. Aufeinanderfolgend können ein Separator, eine Katode, ein Separator, eine Anode, ein Separator, eine Katode usw. aneinander angeordnet sein. Insbesondere kann der Zellstapel der Batteriezelle auf einem Laminatstapel basieren. Bei dem Zellverbund oder den Zellverbünden oder den Laminaten sind die einzelnen Lagen bevorzugt fest miteinander verbunden. Bevorzugt sind die Lagen fest miteinander verbunden und weisen unterschiedliche Dimensionen auf. Die feste Verbindung erfolgt beispielsweise über ein aktiviertes Bindermaterial in Separatorschichten oder alternativ über Klebstoff. Hinsichtlich des Aufbaus der Zellverbünde wird an dieser Stelle noch auf die PCT/DE2020/100240 verwiesen.

Die Vorrichtung weist mehrere Positioniereinheiten auf, welche dazu eingerichtet sind, die Mehrzahl an Zellverbünden und/oder Lagen aufzunehmen. Mit anderen Worten sind die mehreren Positioniereinheiten in ihrer Gesamtheit dazu eingerichtet, die Mehrzahl an Zellverbünden und/oder Lagen aufzunehmen. Mit anderen Worten kann die Mehrzahl an Zellverbünden und/oder Lagen in der Positioniereinheit angeordnet sein. Ferner umfassen die Positioniereinheiten jeweils eine Positionierbacke, wobei die Positionierbacken dazu eingerichtet sind, die Mehrzahl an übereinander angeordneten Zellverbünden und/oder Lagen einzufassen. Mit "Positionierbacke" ist insbesondere eine Backe gemeint, welche als ein bewegliches Seitenteil oder eine bewegliche Seitenfläche zum Halten und/oder Führen und/oder Positionieren der Zellverbünde ausgebildet ist. Insbesondere können die Positionierbacken mehrteilig aufgebaut sein.

Ferner weist die Vorrichtung einen Träger auf, wobei die Mehrzahl an Zellverbünden und/oder Lagen auf dem Träger aufliegen. Beispielsweise kann der Träger als eine Platte oder ein plattenförmiges Werkstück ausgebildet sein. Bevorzugt kann der Träger zwischen den Positioniereinheiten angeordnet sein.

Des Weiteren umfasst die Vorrichtung eine erste Bewegungseinheit, welche dazu eingerichtet ist, die Positioniereinheiten zu bewegen. Mit anderen Worten ist die erste Bewegungseinheit dazu eingerichtet, die Positioniereinheiten in Bewegung zu versetzen. Besonders bevorzugt ist die erste Bewegungseinheit dazu eingerichtet, die Positioniereinheiten in Schwingung zu versetzen oder vibrieren zu lassen.

Die Positioniereinheiten sind derart angeordnet, dass durch die von der Bewegungseinheit initiierte Bewegung die einzelnen Zellverbünde und/oder Lagen mittig zwischen den Positionierbacken zentriert werden. Mit Hilfe der Bewegungseinheit kann eine Zentrierung der Zellverbünde und/oder Lagen zwischen den Positioniereinheiten erfolgen. Mit "Zentrierung" ist insbesondere eine Ausrichtung der Mitte gemeint. Mit anderen Worten können die einzelnen Zellverbünde und/oder Lagen durch die Bewegung der Positioniereinheiten zwischen den Positionierbacken ausgerichtet, insbesondere zentriert, werden. Mit anderen Worten können die Zellverbünde und/oder Lagen über die Mitte ausgerichtet werden. Hierzu liegen die jeweiligen Zellverbünde und/oder Lagen bevorzugt lose aufeinander. Besonders bevorzugt werden die einzelnen Lagen des Zellstapels durch die Bewegung zwischen den, insbesondere seitlich angebrachten, Positionierbacken übereinander zentriert oder deckungsgleich oder parallel übereinandergelegt oder ausgerichtet. Mit "zentrieren" ist insbesondere mittig, bevorzugt zwischen den Positionierbacken, angeordnet oder um einen Mittelpunkt, bevorzugt zwischen den Positionierbacken, ausgerichtet oder auf ein Zentrum, bevorzugt zwischen den Positionierbacken, ausgerichtet, gemeint.

Die Umsetzung der Vorrichtung mit den Positionierbacken und der ersten Bewegungseinheit hat den Vorteil, dass der Zellstapel besonders schnell hergestellt werden kann, also eine besonders schnelle Assemblierung erfolgen kann. Ferner kann die Vorrichtung zur Serienfertigung verwendet werden. Des Weiteren hat die Vorrichtung durch die Positionierbacken und der ersten Bewegungseinheit einen besonders einfachen und kompakten Aufbau. Schließlich kann mithilfe der Positionierbacken eine besonders einfache Skalierung auf andere Zellformate oder Größen erfolgen.

Ferner ist es vorgesehen, dass die erste Bewegungseinheit eine Bewegungsplatte, welche beweglich gelagert ist, und einen Aktor umfasst. Die Bewegungsplatte ist insbesondere als plattenförmiges Werkstück oder Träger oder Platte ausgebildet. Die Bewegungsplatte kann auch als Vibrationsplatte bezeichnet werden. Die Bewegungsplatte ist bevorzugt auf Lagern, insbesondere auf Gummilagern, beweglich gelagert. Die Positioniereinheiten sind an der Bewegungsplatte angeordnet. Mit anderen Worten können die Positioniereinheiten an der Bewegungsplatte gelagert oder befestigt sein. Dabei sind die Positioniereinheiten bevorzugt auf einer Fläche der Bewegungsplatte angeordnet. Der Aktor ist dazu eingerichtet, die Bewegungsplatte zu bewegen, insbesondere in Schwingung zu versetzen oder zu schütteln. Beispielsweise kann der Aktor als ein Vibrationsmotor ausgebildet sein. Der Aktor ist hierzu bevorzugt mit der Bewegungsplatte gekoppelt. Mithilfe der Bewegungsplatte und des Aktors können die Positioniereinheiten alle zusammen gleichzeitig oder aber auch unabhängig voneinander auf besonders einfache und zuverlässige Art und Weise bewegt werden, um die Zellverbünde und/oder Lagen auszurichten.

Zudem ist der Träger von der Bewegung der ersten Bewegungseinheit entkoppelt. Mit anderen Worten können der Träger und die erste Bewegungseinheit schwingungstechnisch entkoppelt oder voneinander getrennt sein. Insbesondere ist der Träger als Auflage für die Zellverbünde und/oder Lagen schwingungstechnisch von der ersten Bewegungseinheit, bevorzugt der Bewegungsplatte, und den an der ersten Bewegungseinheit befestigten und mit dieser mitschwingenden Positioniereinheiten entkoppelt. Bevorzugt schwingt oder bewegt sich die Bewegungseinheit und der Träger schwingt oder bewegt sich bei der Bewegung der ersten Bewegungseinheit nicht mit.

Besonders bevorzugt können die Positioniereinheiten, bevorzugt die Positionierbacken, einzeln oder paarweise bewegt werden oder schwingen. Insbesondere kann die erste Bewegungseinheit dazu eingerichtet sein, die Positionierbacken einzeln oder paarweise in Bewegung oder Schwingung zu versetzen. Mit anderen Worten können die Positioniereinheiten, insbesondere die Positionierbacken, durch die erste Bewegungseinheit einzeln oder paarweise bewegbar sein. Bevorzugt weist die Vorrichtung vier Positionierbacken auf, welche insbesondere paarweise einander gegenüberliegend angeordnet sind. Jeweils zwei der Positionierbacken, bevorzugt die einander gegenüberliegenden, werden gleichzeitig bewegt. Zusätzlich oder alternativ können alle vier Positionierbacken gleichzeitig bewegt werden. Zusätzlich oder alternativ kann jede einzelne Positionierbacke unabhängig von den anderen bewegt werden.

Eine vorteilhafte Ausführungsform sieht vor, dass die Positionierbacken dazu eingerichtet sind, eine Zustellbewegung, insbesondere auf die Zellverbünde und/oder Lagen zu, auszuführen. Mit "Zustellbewegung" ist insbesondere eine Bewegung der Positionierbacken auf das Werkstück zu, in diesem Fall auf den Zellstapel oder die Zellverbünde und/oder die Lagen zu, gemeint. Die Ausrichtung der einzelnen Zellverbünde und/oder Lagen erfolgt insbesondere über die Mitte. Mit anderen Worten werden die einzelnen Zellverbünde und/oder Lagen zueinander zentrisch ausgerichtet. Bevorzugt wird dies durch die beweglichen Positionierbacken, bevorzugt auf allen vier Seiten des Zellstapels, sowie durch einen von den Positionierbacken entkoppelten Träger oder einer entkoppelten Trägerplatte erreicht. Der Träger oder die Trägerplatte, auf der die Zellverbünde und/oder Lagen aufgestapelt werden, schwingt nicht. Um eine Ausrichtung über die Mitte zu erreichen, können die einzelnen Zellverbünde und/oder Lagen in allen 4 Richtungen, insbesondere in der Ebene, zueinander verschoben werden. Die Bewegung der Positionierbacken und deren Abstand zueinander kann dabei spezifisch auf Abmessungen der Eingangsmaterialien - Zellverbünde und/oder Lagen - abgestimmt werden. Alle Positionierbacken, insbesondere auf beiden Seiten der Zellverbünde und/oder Lagen, können demnach beweglich sein und/oder sich auf die Zellverbünde und/oder Lagen zu bewegen. Beispielsweise kann eine weitere Bewegungseinheit der Vorrichtung oder die erste Bewegungseinheit dazu eingerichtet sein, die Positionierbacken zum Ausführen der Zustellbewegung zu bewegen. Die weitere Bewegungseinheit oder die erste Bewegungseinheit kann dazu eingerichtet sein, die Positionierbacken einzeln oder zusammen oder paarweise zum Ausführen der Zustellbewegung zu bewegen.

In vorteilhafter Weise weist die Vorrichtung zumindest eine Luftdüse auf, welche dazu eingerichtet ist, einen Luftstrom bereitzustellen, wobei die Luftdüse durch den Luftstrom dazu eingerichtet ist, die Zellverbünde und/oder Lagen, insbesondere zwischen den Positioniereinheiten, auszurichten. Bevorzugt kann an einer Positioniereinheit eine Luftdüse angeordnet sein. Bevorzugt weist die Vorrichtung mehrere Luftdüsen auf, welche jeweils einen Luftstrom bereitstellen. Besonders bevorzugt weist die Vorrichtung vier Luftdüsen auf, wobei jeweils eine Luftdüse an einer Positionierbacke angeordnet ist. Besonders bevorzugt sind die Luftdüsen dazu eingerichtet, die Ausrichtung der Zellverbünde und/oder Lagen zwischen den Positionierbacken zu unterstützen. Beispielsweise kann gleichzeitig mit der Bewegung der Positionierbacken und/oder nach der Bewegung der Positionierbacken und/oder vor der Bewegung der Positionierbacken ein Luftstrom bereitgestellt werden, welcher auf die Zellverbünde und/oder Lagen zwischen den Positionierbacken gerichtet ist. Beispielsweise können die Positionierbacken an einer vorbestimmten Stelle, insbesondere mittig, eine oder mehrere Öffnungen aufweisen, durch welche Luft, insbesondere bereitgestellt durch die Luftdüse, hindurchströmen kann. Insbesondere tritt der jeweilige Luftstrom durch die Öffnung oder Öffnungen in den Positionierbacken und trifft auf die Zellverbünde und/oder Lagen.

In vorteilhafter Weise sind die Positioniereinheiten an der Bewegungsplatte, insbesondere formschlüssig, mittels einer Befestigungseinrichtung befestigt und/oder positionierbar. Hierzu umfasst die Befestigungseinrichtung zumindest ein Befestigungselement, insbesondere einen Stift oder eine Schraube oder einen Bolzen, und/oder ein Federelement, insbesondere eine Passfeder, wobei die jeweilige Positioniereinheit mittels des zumindest einen Befestigungselements und/oder des Federelements an der Bewegungsplatte befestigbar und/oder positionierbar ist. Zum Beispiel kann die Positionierung mittels eines Stifts, der in einer Sohle der jeweiligen Positioniereinheit sitzt, und/oder einer Passfeder, die in der Bewegungsplatte gehalten ist, realisiert werden. Insbesondere sind über das Befestigungselement und/oder das Federelement die jeweiligen Positioniereinheiten mit der Bewegungsplatte verbunden. Mittels der Befestigungseinrichtung können die jeweiligen Positioniereinheiten auf besonders einfache und zuverlässige Art und Weise befestigt und/oder positioniert werden.

Eine weitere vorteilhafte Ausführungsform sieht vor, dass die Positionierbacken der Positioniereinheiten, insbesondere an einer Innenseite, jeweils eine Positionierfläche aufweisen. Mit anderen Worten können die jeweiligen Positionierbacken an der Innenseite eine Innenfläche, welche insbesondere mit der Mehrzahl an Zellverbünden und/oder Lagen in Berührung kommt oder steht, aufweisen. Ferner ist die Positionierfläche in zumindest zwei Positionierflächenteilbereiche unterteilt. Mit anderen Worten weist die Positionierfläche mehrere Positionierflächenteilbereiche - einen ersten Positionierflächenteilbereich und einen zweiten Positionierflächenteilbereich - auf. Dabei weist ein erster Positionierflächenteilbereich eine glatte Oberfläche auf. Mit anderen Worten ist eine Oberfläche des ersten Positionierflächenteilbereichs plan oder eben ausgebildet. Ein zweiter Positionierflächenteilbereich der Positionierfläche weist Nuten auf. Mit "Nut" ist insbesondere eine Vertiefung oder eine Rinne oder eine Rille, welche sich insbesondere entlang einer Fläche oder Oberfläche des zweiten Positionierflächenteilbereichs erstreckt, gemeint.

Eine weitere vorteilhafte Ausführungsform sieht vor, dass die Oberfläche des ersten Positionierflächenteilbereichs in einem vorbestimmten Winkel geneigt zu der Hochrichtung der Vorrichtung ausgebildet ist. Mit anderen Worten kann die Oberfläche des ersten Positionierflächenteilbereichs schräg zu der Hochrichtung der Vorrichtung angeordnet sein. Mit anderen Worten kann die Oberfläche des ersten Positionierflächenteilbereichs eine Schräge oder steile Ebene aufweisen. Beispielsweise kann die Oberfläche des ersten Positionierflächenteilbereichs in einem Winkel zwischen 5° und 90°, bevorzugt zwischen 5° und 45°, besonders bevorzugt zwischen 5° und 30° zu der Hochrichtung der Vorrichtung angeordnet oder ausgerichtet sein. Die angeschrägte Oberfläche des ersten Positionierflächenteilbereichs hat den Vorteil, dass damit die Zellverbünde und/oder Lagen vorpositioniert werden können, insbesondere in eine vorbestimmte Position rutschen oder entlang der Oberfläche des ersten Positionierflächenteilbereichs abgleiten.

Zusätzlich oder alternativ verlaufen die Nuten des zweiten Positionierflächenteilbereichs bevorzugt in einem vorbestimmten Abstand, insbesondere parallel zueinander, und in einem vorbestimmten Winkel, insbesondere zu einer Transversalebene der Positioniereinheit, von einem Endbereich der Positionierbacke zu einem gegenüberliegenden Endbereich oder Ende der Positionierbacke. Mit anderen Worten können die Nuten von schräg oben nach schräg unten oder von oben nach unten schräg verlaufen. Mit "Transversalebene" ist insbesondere eine quer liegende Ebene rechtwinklig zu einer Längsachse oder Hochrichtung der Vorrichtung oder der Positionierbacke gemeint. Die Transversalebene kann auch als Horizontalebene bezeichnet werden.

Zusätzlich oder alternativ ist der erste Positionierflächenteilbereich in Hochrichtung der Vorrichtung, insbesondere zu einer Vorpositionierung der Mehrzahl an Zellverbünden und/oder Lagen, über dem zweiten Positionierflächenteilbereich angeordnet. Mit anderen Worten kann der erste Positionierflächenteilbereich auf dem zweiten Positionierflächenteilbereich angeordnet sein. Mit anderen Worten können der erste Positionierflächenteilbereich und der zweite Positionierflächenteilbereich aneinander und/oder übereinander angeordnet sein.

In vorteilhafter Weise weist die Vorrichtung wenigstens vier Positioniereinheiten auf. Dabei ist weiter bevorzugt, dass jeweils zwei Positioniereinheiten einander gegenüberliegend angeordnet und die Positionierflächen der Positioniereinheiten einander zugewandt sind. Insbesondere sind die Positioniereinheiten paarweise einander gegenüberliegend angeordnet. Besonders bevorzugt sind die Positioniereinheiten, insbesondere der Reihe nach, senkrecht zueinander angeordnet, sodass diese eine rechteckige oder quadratische Fläche oder einen Aufnahmebereich einschließen. Besonders bevorzugt können die ersten Positionierflächenteilbereiche, insbesondere durch die schräge Oberfläche, zusammen eine Trichterform ergeben oder bilden.

Gemäß einer vorteilhaften Weiterbildung ist es vorgesehen, dass die Vorrichtung eine zweite Bewegungseinheit umfasst, welche an dem Träger angeordnet ist. Die zweite Bewegungseinheit ist dazu eingerichtet, den Träger in eine Hochrichtung der Vorrichtung, insbesondere beim Bewegen der Positioniereinheiten, zu bewegen. Mit anderen Worten ist die zweite Bewegungseinheit dazu eingerichtet, den Träger auf- und/oder abwärts zu bewegen. Mit anderen Worten ist die zweite Bewegungseinheit dazu eingerichtet, den Träger anzuheben oder abzusenken. Insbesondere weist die zweite Bewegungseinheit eine Hebeeinrichtung auf, welche an dem Träger angeordnet ist, wobei die Hebeeinrichtung dazu eingerichtet ist, den Träger in eine Hochrichtung der Vorrichtung, insbesondere beim Bewegen der Positioniereinheit, zu bewegen. Beispielsweise umfasst die zweite Bewegungseinheit zum Bewegen des Trägers eine Kugelumlaufspindel. Bei der zweiten Bewegungseinheit handelt es sich insbesondere um eine von der die Bewegung der Positionierbacken bewirkende erste Bewegungseinheit separate und unabhängige weitere Bewegungseinheit. Bei der zweiten Bewegungseinheit kann über eine Achse der zweiten Bewegungseinheit ein Verfahrweg und eine Achsgeschwindigkeit variiert oder angepasst werden. Zum Beispiel kann nach Abmessungen, Anzahl und Eigenschaften der Zellverbünde und/oder Lagen über die Achse der Verfahrweg und die Achsgeschwindigkeit der Kugelumlaufspindel variiert werden. Ferner kann der Träger auf zumindest einem Stützelement oder mehreren Stützelementen angeordnet sein oder darauf aufliegen. Insbesondere sind das zumindest eine Stützelement oder die mehreren Stützelemente an einer Unterseite, welche den Positioniereinheiten oder den Zellverbünden und/oder Lagen abgewandt ist angeordnet. Das zumindest eine Stützelement oder die mehreren Stützelemente können als Stab oder Stange oder Balken ausgebildet sein. Dabei kann der Träger zusammen mit den Stützelementen bewegt werden. Die zweite Bewegungseinheit und/oder der Träger können, insbesondere zusammen, als Hebeeinrichtung bezeichnet werden. Mit Hilfe des Trägers und der zweiten Bewegungseinheit können die Zellverbünde und/oder Lagen auf besonders einfache, schnelle und zuverlässige Art und Weise zwischen die Positionierbacken bewegt oder befördert werden.

In vorteilhafter Weise umfasst die Vorrichtung einen Grundkörper, wobei der Träger und/oder die Positioniereinheiten und/oder die erste Bewegungseinheit und/oder die zweite Bewegungseinheit an dem Grundkörper angeordnet sind. Insbesondere kann der Grundkörper als ein Grundgestell ausgebildet sein, welcher dazu eingerichtet ist, den Träger und/oder die Positioniereinheiten und/oder die erste Bewegungseinheit und/oder die zweite Bewegungseinheit zu halten und/oder zu lagern. Der Grundkörper kann bevorzugt an einem Maschinentisch verschraubt sein.

Eine weitere vorteilhafte Ausführungsform sieht vor, dass die Zellverbünde und/oder Lagen jeweils aufeinander, insbesondere in eine Hochrichtung der Vorrichtung, und aneinander angeordnet zumindest zwei elektrisch leitfähige Elemente und zwei elektrisch isolierende Elemente umfassen, wobei eines der beiden elektrisch leitfähigen Elemente, insbesondere umlaufend, größer und/oder steifer ausgebildet ist als das andere elektrisch leitfähige Element. Insbesondere umfasst oder besteht ein jeweiliger Zellverbund und/oder Lagen aus vier Lagen mit zwei elektrisch leitfähigen Elementen und zwei elektrisch isolierenden Elementen. Beispielsweise kann ein elektrisch leitfähiges Element als Anode und das andere elektrisch leitfähige Element als Kathode ausgebildet sein. Beispielsweise kann die Anode umlaufend größer und/oder steifer als die Kathode ausgebildet sein. Insbesondere ist die Steifigkeit der elektrisch isolierenden Elemente geringer als die Steifigkeit der elektrisch leitfähigen Elemente bzw. zumindest eines der elektrisch leitfähigen Elemente. Mit "umlaufend" ist insbesondere in Umfangsrichtung gemeint. Mit anderen Worten kann die Anode eine größere Fläche aufweisen als die Kathode. Mit anderen Worten kann die Anode flächig größer sein als die Kathode. Mit "steif" ist insbesondere gemeint, dass eines der beiden elektrisch leitfähigen Elemente eine höhere Steifigkeit aufweist als die nichtleitenden Elemente. Insbesondere beschreibt die Steifigkeit den Widerstand eines Körpers gegen elastische Verformung durch eine Kraft oder ein Moment. Insbesondere sind die elektrisch leitfähigen Elemente platten- oder scheibenförmig ausgebildet. Ferner sind die elektrisch isolierenden Elemente, insbesondere umlaufend, größer ausgebildet als das größere elektrisch leitfähige Element. Das elektrisch isolierende Element kann beispielsweise als Isolator ausgebildet sein. Mit anderen Worten kann eine Fläche des elektrisch isolierenden Elements größer ausgebildet sein als das größere elektrisch leitfähige Element. Beispielsweise ist eine Fläche des Isolators größer eine Fläche der Anode. Beispielsweise sind aufeinanderfolgend ein Separator oder Isolator, eine Anode, ein Separator, eine Katode oder ein Separator, eine Katode, ein Separator, eine Anode angeordnet.

Zu der Erfindung gehört auch ein Verfahren zum Betreiben einer Vorrichtung zum Herstellen eines Zellstapels, welcher eine Mehrzahl an Zellverbünden und/oder Lagen aufweist. Dabei umfasst die Vorrichtung mehrere Positioniereinheiten, welche dazu eingerichtet sind, die Mehrzahl an Zellverbünden und/oder Lagen aufzunehmen, wobei die Positioniereinheiten jeweils eine Positionierbacke umfassen, wobei die Positionierbacken dazu eingerichtet sind, die Mehrzahl an übereinander angeordneten Zellverbünden und/oder Lagen einzufassen. Die Vorrichtung weist ferner eine erste Bewegungseinheit auf, welche dazu eingerichtet ist, die Positioniereinheiten zu bewegen. Die erste Bewegungseinheit umfasst eine Bewegungsplatte, welche beweglich gelagert ist, und einen Aktor, wobei die Positioniereinheiten an der Bewegungsplatte angeordnet sind, wobei der Aktor dazu eingerichtet ist, die Bewegungsplatte zu bewegen, insbesondere in Schwingung zu versetzen. Ferner weist die Vorrichtung einen Träger auf, wobei die Mehrzahl an Zellverbünden und/oder Lagen auf dem Träger aufliegen, wobei der Träger von der Bewegung der ersten Bewegungseinheit entkoppelt ist. In einem Verfahrensschritt wird die Mehrzahl an Zellverbünden und/oder Lagen auf dem Träger, insbesondere in eine Hochrichtung der Vorrichtung, übereinander angeordnet. Mit anderen Worten werden mehrere Zellverbünde und/oder Lagen auf dem Träger übereinandergelegt oder gestapelt. Mit anderen Worten können die Zellverbünde und/oder Lagen auf dem Träger vor oder während dem Zentrieren aufgelegt werden. Mit anderen Worten können die Zellverbünde und/oder Lagen auf dem Träger vor dem Zentrieren gestapelt werden. Mit anderen Worten können die Zellverbünde und/oder Lagen einzeln auf dem Träger übereinandergelegt werden. In einem weiteren Verfahrensschritt wird die erste Bewegungseinheit bewegt, sodass die Mehrzahl der übereinander angeordneten Zellverbünde und/oder Lagen zwischen den die Zellverbünde und/oder Lagen einfassenden Positionierbacken zentriert oder ausgerichtet wird.

Eine weitere vorteilhafte Ausführungsform sieht vor, dass die Vorrichtung ferner eine zweite Bewegungseinheit aufweist. Die zweite Bewegungseinheit ist an dem Träger angeordnet. Die zweite Bewegungseinheit senkt den Träger in die Hochrichtung der Vorrichtung beim Bewegen der Positioniereinheiten zum Zentrieren der Zellverbünde und/oder Lagen ab. Mit anderen Worten werden die auf dem Träger angeordneten Zellverbünde und/oder Lagen durch das Absenken oder Herunterfahren des Trägers zwischen den Positioniereinheiten aufgenommen oder eingefasst.

Im Folgenden wird noch ein konkretes Ausführungsbeispiel beschrieben:
Die Ausrichtung der einzelnen Zellverbünde oder auch Lagen erfolgt über die Mitte. Alle einzelnen Zellverbünde oder auch Lagen werden zueinander zentrisch ausgerichtet. Dies wird durch bewegliche Positionierbacken auf allen 4 Seiten des Zellstapels, sowie durch einen, von den Positionierbacken entkoppelten, Träger erreicht. Der Träger, auf der die Zellverbünde und/oder Lagen aufgestapelt werden, schwingt nicht. Um eine Ausrichtung über die Mitte zu erreichen, werden die einzelnen Zellverbünde und/oder Lagen in allen 4 Richtungen, insbesondere in der Ebene, zueinander verschoben. Die Bewegung der Positionierbacken und deren Abstand zueinander kann dabei immer spezifisch auf die Abmessungen der Eingangsmaterialien, also insbesondere die Zellverbünde und/oder Lagen, abgestimmt werden. Dadurch gelingt es insbesondere eine Zentrierung über die Mitte alle Zellverbünde und/oder Lagen zu erreichen, obwohl die Bauteile, also die Kathode, der Separator und die Anode, unterschiedlich groß sind. Mit "Eingangsmaterial" ist also insbesondere das Material zur Zellstapelherstellung, also die Lagen und/oder Zellverbünde oder Laminate gemeint. Das Verfahren erfolgt dabei unabhängig von der Schwerkraft.

In vorteilhafter Weise umfassen die Zellverbünde und/oder Lagen jeweils aufeinander und aneinander angeordnet zumindest zwei elektrisch leitfähige Elemente und zwei elektrisch isolierende Elemente, wobei die elektrisch isolierenden Elemente während der Bewegung der Zellstapel oder Zellverbünde und/oder Lagen zumindest teilweise in die Hochrichtung der Vorrichtung umgeklappt werden. Insbesondere werden durch das Bewegen der Positioniereinheiten und einem, insbesondere gleichzeitigem, Absenken des Trägers mit den darauf angeordneten Zellverbünden und/oder Lagen, die Zellverbünde und/oder Lagen an den sich seitlich befindenden Positioniereinheiten vorbei bewegt. Durch diese Bewegung wird das elektrisch isolierende Element nach oben geklappt. Bevorzugt wird ein Randbereich, insbesondere eine an den elektrisch leitfähigen Elementen überstehende Fläche, des elektrisch isolierenden Elements nach oben geklappt oder in die Hochrichtung umgeklappt oder umgebogen. Mit anderen Worten wird insbesondere zu zumindest einem elektrisch leitfähigen Element überstehender Teil des elektrisch isolierenden Elements umgeklappt. Mit anderen Worten werden die elektrisch isolierenden Elemente zumindest teilweise umgeklappt oder umgebogen. Insbesondere werden die elektrisch isolierenden Elemente durch das Zusammenspiel aus der Absenkbewegung, der über den jeweiligen elektrisch isolierenden Elementen angeordneten elektrisch leitfähigen Element und den seitlich angeordneten Positionierbacken, insbesondere umlaufend an einem über den elektrisch isolierenden Element überstehenden Randbereich, umgeknickt oder umgebogen. Durch das flächig, den Zellverbund umrandende, elektrisch isolierende Element, werden die Lagen der Zellverbünde und/oder Lagen auf besonders einfache Art und Weise eingeschlossen oder eingefasst.

Gemäß einer vorteilhaften Weiterbildung ist es vorgesehen, dass die Positionierbacken derart angeordnet sind, dass während der Bewegung der Zellverbünde und/oder Lagen die elektrisch isolierenden Elemente derart umgeklappt werden, dass die elektrisch isolierenden Elemente jeweils an einem der elektrisch leitfähigen Elemente anliegen. Bevorzugt liegen die elektrisch isolierenden Elemente an der Anode an. Zum Beispiel sind die Positionierbacken so ausgeführt, dass diese den überragenden Isolator definiert nach oben stellen und dieser somit an der Anode anliegt. Zusätzlich oder alternativ sind die Positionierbacken bevorzugt derart angeordnet, dass während der Bewegung der Zellverbünde und/oder Lagen die elektrisch isolierenden Elemente derart umgeklappt werden, dass die elektrisch isolierenden Elemente an einer Innenseite der Positionierbacken anliegen. Insbesondere ist der umgeknickte Teil des elektrisch isolierenden Elements zwischen der Positionierbacke und der Mehrzahl an Zellverbünden und/oder Lagen angeordnet.

In vorteilhafter Weise wird vor einem Entnehmen der Zellstapel, der Zellstapel, insbesondere formschlüssig oder stoffschlüssig, besonders bevorzugt durch Kleben oder Laminieren oder mittels einer Klemmung, beispielsweise mittels einer Klemmplatte, fixiert.

Eine weitere vorteilhafte Ausführungsform sieht vor, dass nach dem Fixieren des Zellstapels die Positioniereinheiten geöffnet und der Zellstapel samt Fixierung aus der Vorrichtung entnommen wird. Beispielsweise kann der Zellstapel mittels eines Greifers entnommen werden.

Zu der Erfindung gehören auch Weiterbildungen der erfindungsgemäßen Vorrichtung und des erfindungsgemäßen Verfahrens, die Merkmale aufweisen, wie sie bereits im Zusammenhang mit den Weiterbildungen der erfindungsgemäßen Vorrichtung und des erfindungsgemäßen Verfahrens beschrieben worden sind. Aus diesem Grund sind die entsprechenden Weiterbildungen der erfindungsgemäßen Vorrichtung und des erfindungsgemäßen Verfahrens hier nicht noch einmal beschrieben.

Ein Ausführungsbeispiel wird im Folgenden anhand der beigefügten Zeichnungen näher erläutert. Darin zeigt:
- Fig. 1: eine schematische Darstellung einer Vorrichtung zum Herstellen eines Zellstapels, welche einen Grundkörper, mehrere Positioniereinheiten, eine Bewegungsplatte, einen Träger, eine erste Bewegungseinheit und eine zweite Bewegungseinheit umfasst, in einer Perspektivansicht;
- Fig. 2: eine schematische Darstellung der Vorrichtung zum Herstellen eines Zellstapels von Fig. 1 in einer Beladeposition des Trägers in einer Schnittdarstellung;
- Fig. 3: eine schematische Darstellung der Vorrichtung zum Herstellen eines Zellstapels von Fig. 1 in einer Ausrichtposition des Trägers in einer Schnittdarstellung;
- Fig. 4: eine schematische Darstellung einer Positioniereinheit, welche eine Positionierbacke und eine Einstelleinrichtung umfasst, in einer Perspektivansicht;
- Fig. 5a: eine schematische Darstellung eines Ausschnitts der Vorrichtung mit einer Anordnung der Positionierbacken;
- Fig. 5b: eine schematische Darstellung eines Ausschnitts der Vorrichtung mit einer Anordnung der Positionierbacken; und
- Fig. 6: eine schematische Darstellung eines Ausschnitts der mit mehreren Zellverbünden beladenen Vorrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

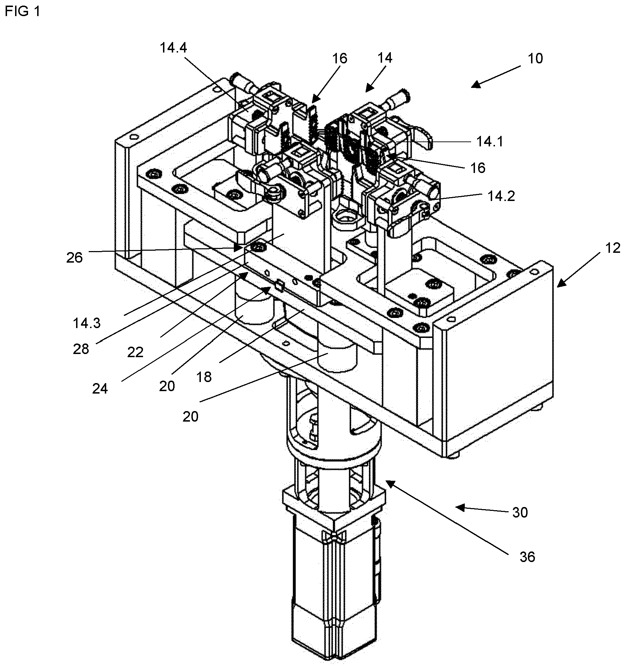

Figuren Fig. 1 bis Fig. 3 zeigen in einer schematischen Darstellung eine Vorrichtung 10 zum Herstellen eines Zellstapels. Ein Zellstapels umfasst mehrere Zellverbünde. Alternativ kann der Zellstapel auch einzelne Lagen aufweisen. Die im Folgenden beschriebenen Ausführungsbeispiele sind auf Zellstapel mit mehreren Zellverbünden gerichtet. Entsprechend können die beschriebenen Ausführungsbeispiele anstelle der Zellverbünde einzelne Lagen aufweisen. Die jeweiligen Zellverbünde weisen mehrere elektrisch leitfähige Elemente, insbesondere zwei elektrisch leitfähige Elemente, auf. Bei den elektrisch leitfähigen Elementen kann es sich um eine Anode und um eine Kathode handeln. Ferner weisen die jeweiligen Zellverbünde mehrere elektrisch isolierende Elemente, insbesondere zwei elektrisch isolierenden Elemente, auf. Bei dem elektrisch isolierenden Element kann es sich bevorzugt um einen Isolator, welcher auch als Separator bezeichnet werden kann, handeln. Bevorzugt sind die jeweiligen Zellverbünde aus flächigen oder plattenförmigen Elementen - elektrisch leitfähige Elemente und elektrisch isolierende Elemente - gebildet.

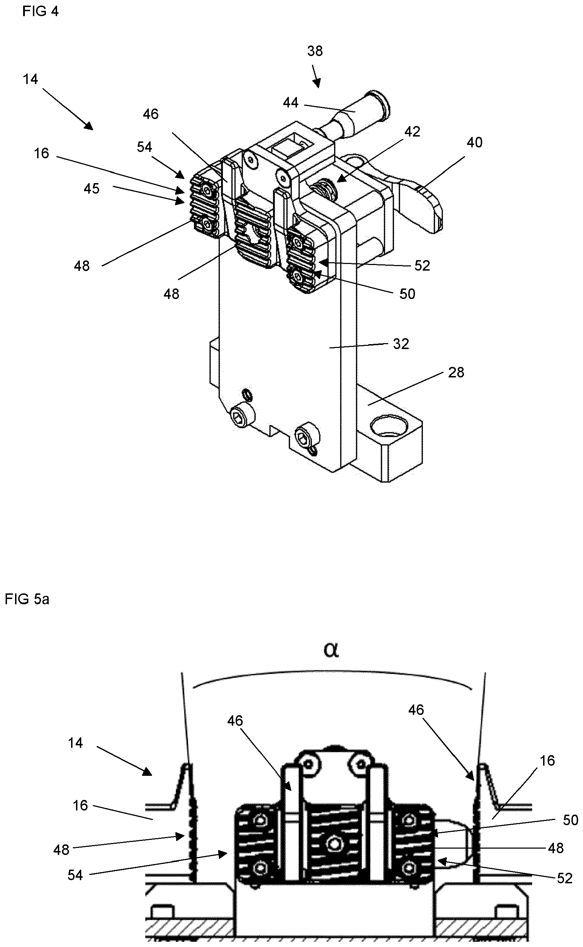

Die Vorrichtung 10 umfasst einen Grundkörper 12. Der Grundkörper 12 kann als Gerüst oder Träger oder Grundgestell ausgebildet sein. Der Grundkörper 12 kann an einem Maschinentisch (in Figuren nicht gezeigt) befestigt, insbesondere verschraubt, sein. An dem Grundkörper 12 der Vorrichtung 10 sind mehrere Positioniereinheiten 14 angeordnet. Hierbei weist die Vorrichtung 10 vier Positioniereinheiten 14 - eine erste Positioniereinheit 14.1, eine zweite Positioniereinheit 14.2, eine dritte Positioniereinheit 14.3 und eine vierte Positioniereinheit 14.4 - auf. Auf den Aufbau der jeweiligen Positioniereinheiten 14 wird im Zusammenhang mit Fig. 4 näher eingegangen. Die Positioniereinheiten 14 sind paarweise einander gegenüberliegend angeordnet. Ferner sind die jeweiligen Positioniereinheiten 14 aufeinanderfolgend oder aneinander angrenzend senkrecht oder orthogonal zueinander angeordnet. Zusammen schließen die Positioniereinheiten 14 - die erste Positioniereinheit 14.1, die zweite Positioniereinheit 14.2, die dritte Positioniereinheit 14.3 und die vierte Positioniereinheit 14.4 - einen Aufnahmebereich oder eine Aufnahmefläche ein.

Die Positioniereinheiten 14 sind dazu eingerichtet, die Mehrzahl an Zellverbünden aufzunehmen. Mit anderen Worten sind die mehreren Positioniereinheiten 14 in ihrer Gesamtheit dazu eingerichtet, die Mehrzahl an Zellverbünden aufzunehmen. Mit anderen Worten kann die Mehrzahl an Zellverbünden zwischen den Positioniereinheiten 14 in dem Aufnahmebereich angeordnet sein. Ferner umfassen die Positioniereinheiten 14 jeweils eine Positionierbacke 16. Die Positionierbacken 16 der Positioniereinheiten 14 sind dazu eingerichtet, die Mehrzahl an übereinander angeordneten Zellverbünden einzufassen. Mit "Positionierbacke" ist insbesondere eine Backe gemeint, welche als ein bewegliches Seitenteil oder eine bewegliche Seitenfläche zum Einklemmen und/oder Halten und/oder Festklemmen und/oder Anpressen und/oder Positionieren der Zellverbünde ausgebildet ist. Die Positionierbacke 16 kann auch als Ausrichtbacke bezeichnet werden.

Des Weiteren umfasst die Vorrichtung 10 erste Bewegungseinheit, welche eine Bewegungsplatte 18 und einen Aktor 37 aufweist. An der Bewegungsplatte 18 sind die Positioniereinheiten 14 angeordnet oder befestigt. Die Bewegungsplatte 18 ist als Platte oder plattenförmiges Werkstück ausgebildet. Die Bewegungsplatte 18 ist auf Lagern 20 der Vorrichtung 10 an dem Grundkörper 12 befestigt oder angeordnet oder gelagert. Die Lager 20 können als Gummilager ausgebildet sein. Bevorzugt ist die Bewegungsplatte 18 auf vier Lagern gelagert. Die Bewegungsplatte 18 ist zwischen den Lagern 20 und den Positioniereinheiten 14 angeordnet.

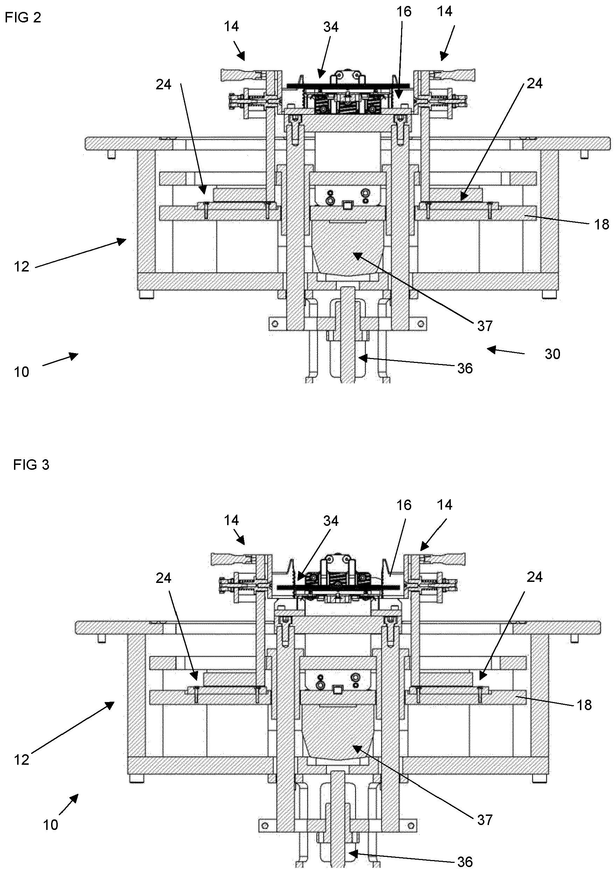

Der Aktor 37 der ersten Bewegungseinheit ist dazu eingerichtet, die Bewegungsplatte 18 und/oder die Positioniereinheiten 14 in Schwingung zu versetzen. Hierzu ist der Aktor 37 mit der Bewegungsplatte 18 gekoppelt. Durch die durch die erste Bewegungseinheit oder den Aktor 37 initiierte Bewegung der Bewegungsplatte 18 und/oder der Positioniereinheiten 14 vibriert die Bewegungsplatte 18 und/oder vibrieren die Positioniereinheiten 14. Die Bewegungsplatte 18 kann auch als Vibrationsplatte bezeichnet werden. Zum Bewegen der Bewegungsplatte 18 und/oder der Positioniereinheiten 14 ist der Aktor 37 als ein Motor, insbesondere als ein Vibrationsmotor, ausgebildet. Wie aus Fig. 2 ersichtlich, ist der Aktor 37 in die Hochrichtung der Vorrichtung 10 unter der Bewegungsplatte 18 angeordnet.

Die Positioniereinheiten 14 sind an der Bewegungsplatte 18, insbesondere formschlüssig, mittels einer Befestigungseinrichtung 22 befestigt und/oder positionierbar. Zum Positionieren und/oder Befestigen der jeweiligen Positioniereinheit 14.1, 14.2, 14.3, 14.4 weist die Befestigungseinrichtung 22 einen Stift 26 oder eine Schraube oder einen Bolzen auf. Die jeweilige Positioniereinheit 14.1, 14.2, 14.3, 14.4 weist an einem Endbereich eine Sohle 28 auf, über welche die jeweilige Positioniereinheit 14.1, 14.2, 14.3, 14.4 mittels des Stifts 26 oder der Schraube oder des Bolzens an der Bewegungsplatte 18 befestigt ist. Mit "Sohle" ist insbesondere ein Endbereich gemeint, über welchen die jeweilige Positioniereinheit 14.1, 14.2, 14.3, 14.4 mit der Bewegungsplatte 18 verbunden ist. Die Sohle 28 bildet einen quaderförmigen Fortsatz an einem Ende oder Endbereich der jeweiligen Positioniereinheit 14.1, 14.2, 14.3, 14.4. Die jeweilige Positioniereinheit 14.1, 14.2, 14.3, 14.4 kann auch mit mehreren Stiften oder Schrauben oder Bolzen an der Bewegungsplatte 18 befestigt sein. Der Stift 26 oder die Schraube oder der Bolzen gehen durch die Sohle 28 der jeweiligen Positioniereinheit 14.1, 14.2, 14.3, 14.4 hindurch und verbinden die Positioniereinheit 14.1, 14.2, 14.3, 14.4, insbesondere formschlüssig, mit der Bewegungsplatte 18. Zum Positionieren und/oder Befestigen der jeweiligen Positioniereinheit 14.1, 14.2, 14.3, 14.4 weist die Befestigungseinrichtung 22 ferner ein Federelement 24, welches insbesondere als eine Passfeder ausgebildet ist, auf. Zum Beispiel kann die Positionierung mittels des Stifts 26, der in der Sohle 28 der jeweiligen Positioniereinheit 14.1, 14.2, 14.3, 14.4 sitzt, und/oder der Passfeder, die in der Bewegungsplatte 18 gehalten ist, realisiert werden. Die Passfeder greift in eine Nut an einer Unterseite der jeweiligen Positioniereinheit oder Sohle 28 der jeweiligen Positioniereinheit 14.1, 14.2, 14.3, 14.4, welche der Bewegungsplatte 18 zugewandt ist, und in eine Nut der Bewegungsplatte 18, insbesondere in einer Fläche der Bewegungsplatte 18, welche der Positioniereinheit 14.1, 14.2, 14.3, 14.4 zugewandt ist, ein. Hierdurch entsteht eine formschlüssige Verbindung zwischen der Bewegungsplatte 18 und der jeweiligen Positioniereinheit 14.1, 14.2, 14.3, 14.4.

Die Positioniereinheiten 14 können je nach herzustellendem Zellstapel ausgewechselt werden. Hierzu ist die Befestigungseinrichtung 22 zu lösen.

Ferner weist die Vorrichtung 10 eine zweite Bewegungseinheit 30 und einen Träger 34 (in Fig. 1 nicht gezeigt) auf. Der Träger 34 ist an der zweiten Bewegungseinheit 30 angeordnet. Die zweite Bewegungseinheit 30 ist dazu eingerichtet, den Träger 34 in eine Hochrichtung der Vorrichtung 10 zu bewegen oder zu verschieben. Mit anderen Worten kann die zweite Bewegungseinheit 30 den Träger 34 nach oben oder unten bewegen. Insbesondere kann die zweite Bewegungseinheit 30 den Träger 34 von einer Beladeposition in eine Ausrichtposition und umgekehrt von eine Ausrichtposition in eine Beladeposition bewegen. Hierbei ist die Beladeposition in die Hochrichtung der Vorrichtung 10 über der Ausrichtposition angeordnet. Bei der Bewegung von der Beladeposition in die Ausrichtposition bewegt sich der Träger 34 von den Positionierbacken 16 in Richtung der Sohle 28 der Positioniereinheit 14, bleibt aber insbesondere auf Höhe der Positionierbacken 16. Insbesondere erstreckt sich die Hochrichtung parallel zur Zeichenebene. In Fig. 2 befindet sich der Träger 34 in der Beladeposition. In der Beladeposition wird der Träger 34 insbesondere mit den Zellverbünden beladen, also die Zellverbünde auf dem Träger 34 gestapelt oder darauf angeordnet. In Fig. 3 befindet sich der Träger 34 in der Ausrichtposition. Bei der Bewegung in die Ausrichtposition bewegt sich der Träger 34 zusammen mit den darauf angeordneten Zellverbünden.

Auf dem Träger 34 werden die Zellverbünde vor dem Zentrieren in der Beladeposition des Trägers 34 aufgelegt. Mit anderen Worten können die Zellverbünde auf dem Träger 34 vor dem Zentrieren gestapelt, bevorzugt lose, werden. Dabei befindet sich der Träger 34 zunächst in der Beladeposition (Fig 2). Zum Zentrieren der Zellverbünde fährt oder bewegt die zweite Bewegungseinheit 30 den Träger 34 in die Ausrichtposition (Fig. 3). Während der Bewegung des Trägers 34 von der Beladeposition in die Ausrichtposition bewegt zusätzlich die erste Bewegungseinheit oder der Aktor 37 der ersten Bewegungseinheit die Positioniereinheiten 14. Die zweite Bewegungseinheit 30 senkt den Träger 34 in die Hochrichtung der Vorrichtung 10 beim Bewegen der Positioniereinheiten 14 zum Zentrieren oder Ausrichten der Zellverbünde ab. Mit anderen Worten werden die auf dem Träger 34 angeordneten Zellverbünde durch das Absenken oder Herunterfahren des Trägers 34 und der Bewegung der Positioniereinheiten 14 zwischen den Positioniereinheiten 14 aufgenommen oder eingefasst oder in den Aufnahmebereich zwischen den Positioniereinheiten 14 bewegt.

Die zweite Bewegungseinheit 30 und/oder der Träger 34 sind auf Lagern, insbesondere Gummilagern, gelagert. Durch die Lagerung der zweiten Bewegungseinheit 30 und/oder des Trägers 34 auf Lagern wird die zweite Bewegungseinheit 30 und/oder der Träger 34 von der Bewegung der ersten Bewegungseinheit oder des Aktors 37 der ersten Bewegungseinheit entkoppelt.

Im Zusammenhang mit Fig. 2 und Fig. 3 soll auf die Bewegung des Trägers 34 zum Ausrichten der Zellverbünde näher eingegangen werden. Der Träger 34 ist auf oder an der zweiten Bewegungseinheit 30 angeordnet. Dabei ist der Träger 34 relativ zu dem Grundkörper 12 bewegbar. Die zweite Bewegungseinheit 30 und/oder der Träger 34 ist auf Lagern gelagert und wird somit von den Schwingungen des Aktors und/oder der Bewegungsplatte 18 entkoppelt. Die zweite Bewegungseinheit 30 umfasst eine Kugelumlaufspindel 36. Der Träger 34 wird mittels der Kugelumlaufspindel 36 während des Bewegens, insbesondere Vibrierens der Positioniereinheiten 14 oder Positionierbacken 16 nach unten gefahren, insbesondere von der Beladeposition in die Ausrichtposition bewegt. Dabei wird der Träger 34 entlang einer Hubachse der zweiten Bewegungseinheit 30 oder Vorrichtung 10 bewegt oder verfahren. Der Träger 34 samt den darauf angeordneten Zellverbünden befindet sich in Fig. 3 in der Ausrichtposition in der Vorrichtung 10, insbesondere zwischen dem Positioniereinheiten 14 oder den Positionierbacken 16 der Positioniereinheiten 14. Sobald sich der Träger 34 in der Ausrichtposition befindet, sind die einzelnen Lagen der Zellverbünde definiert übereinander zwischen Positionierbacken 16 zentriert oder ausgerichtet.

In Fig. 4 ist in einer Perspektivansicht eine Positioniereinheit 14 der Positioniereinheiten dargestellt. Die Positioniereinheit 14 weist eine Positionierbacke 16 und die Sohle 28 auf. Die Sohle 28 der Positioniereinheit 14 ist über ein Zwischenstück 32 mit der Positionierbacke 16 verbunden. An dem Zwischenstück 32 sind die Sohle 28, die Positionierbacke 16 und eine Einstelleinrichtung 38 angeordnet. An einer Vorderseite des Zwischenstücks 32 ist die Positionierbacke 16, insbesondere an einem oberen Endbereich des Zwischenstücks 32, und an einer Rückseite des Zwischenstücks 32, welche der Vorderseite abgewandt ist, ist die Sohle 28, insbesondere an einem unteren dem oberen Endbereich gegenüberliegenden Endbereich des Zwischenstücks 32, der Positioniereinheit 14 angeordnet. Das Zwischenstück 32 ist als Platte oder plattenförmiges Werkstück ausgebildet. Über die Sohle 28 ist die Positioniereinheit 14 an der Bewegungsplatte 18 befestigbar und/oder positionierbar. An einer Unterseite der Positioniereinheit 14, insbesondere an einer Unterseite des Zwischenstücks 32 und der Sohle 28, welche insbesondere ineinander übergehen oder eine gemeinsame Fläche bilden, weist die Positioniereinheit 14 die Nut auf, in welche zum Positionieren und/oder Befestigen das Federelement 24 eingreift.

Des Weiteren weist Positioniereinheit 14 die Einstelleinrichtung 38 zum Einstellen einer Position der Positionierbacke 16 auf. Die Einstellungseinrichtung 38 umfasst einen Exzenterspannhebel 40 und ein weiteres Federelement 42. Das weitere Federelement 42 kann beispielsweise als eine Druckfeder ausgebildet sein. Zum Einstellen einer Position der Positionierbacke 16 wird der Exzenterspannhebel 40 bewegt. Dabei ist das weitere Federelement 42 dazu eingerichtet, bei der Bewegung der Positionierbacke 16 diese auf einen Anschlag der Positioniereinheit 14 zu drücken. Ferner umfasst die Einstelleinrichtung 38 eine Justierschraube 44. Die Justierschraube 44 ist insbesondere als eine Mikrometerschraube ausgebildet. Die Justierschraube 44 ist dazu eingerichtet, eine Position des Anschlags einzustellen.

Um den kompletten Zellstapels, also die Mehrzahl an Zellverbünden, nach dem Ausrichten in der Position aus der Vorrichtung 10 entnehmen zu können, müssen die Positionierbacken 16 von dem Träger 34 weggefahren werden. Hierfür wird der Exzenterspannhebel 40 umgelegt. Die Druckfeder sorgt dafür, dass die Positionierbacken 16 beim Zustellen den einen Anschlag oder Festanschlag gedrückt werden. Somit wird eine definierte Lage der Positionierbacken 16 sichergestellt. Die Einstellung als Festanschlag oder des Anschlags wird mittels der Justierschraube 44 vorgenommen.

Wie aus Fig. 4 ersichtlich, weist die Positionierbacke 16 der Positioniereinheit 14 an einer Innenseite, welche insbesondere der Sohle 28 oder dem Zwischenstück 32 abgewandt ist, eine Positionierfläche 45 auf. Die Positionierfläche 45 ist in zumindest zwei Positionierflächenteilbereiche 46, 48 unterteilt. Mit anderen Worten ist die Positionierbacke 16 mehrteilig aufgebaut oder in mehrere Bereiche oder Oberflächenbereiche unterteilt. Ein erster Positionierflächenteilbereich 46 weist eine glatte Oberfläche auf. Ein zweiter Positionierflächenteilbereich 48 weist Nuten 50 auf.

Wie in Fig. 4 gezeigt, sind die jeweiligen Positionierflächenteilbereiche 46, 48 aufgeteilt oder aufgetrennt. Dabei sind nebeneinander, insbesondere senkrecht zur Hochrichtung der Vorrichtung 10, und/oder aufeinander folgend ein Teil des zweiten Positionierflächenteilbereichs 48, ein Teil des ersten Positionierflächenteilbereichs 46, ein Teil des zweiten Positionierflächenteilbereichs 48, ein Teil des ersten Positionierflächenteilbereichs 46 und wieder ein Teil des zweiten Positionierflächenteilbereichs angeordnet. Die Teile des ersten Positionierflächenteilbereichs 46 sind zwischen den Teilen des zweiten Positionierflächenteilbereichs 48 angeordnet. Zusammen ergeben die jeweiligen Teile des ersten Positionierflächenteilbereichs 46 den ersten Positionierflächenteilbereich 46 und/oder die jeweiligen Teile der zweiten Positionierflächenteilbereiche 48 den zweiten Positionierflächenteilbereich 48.

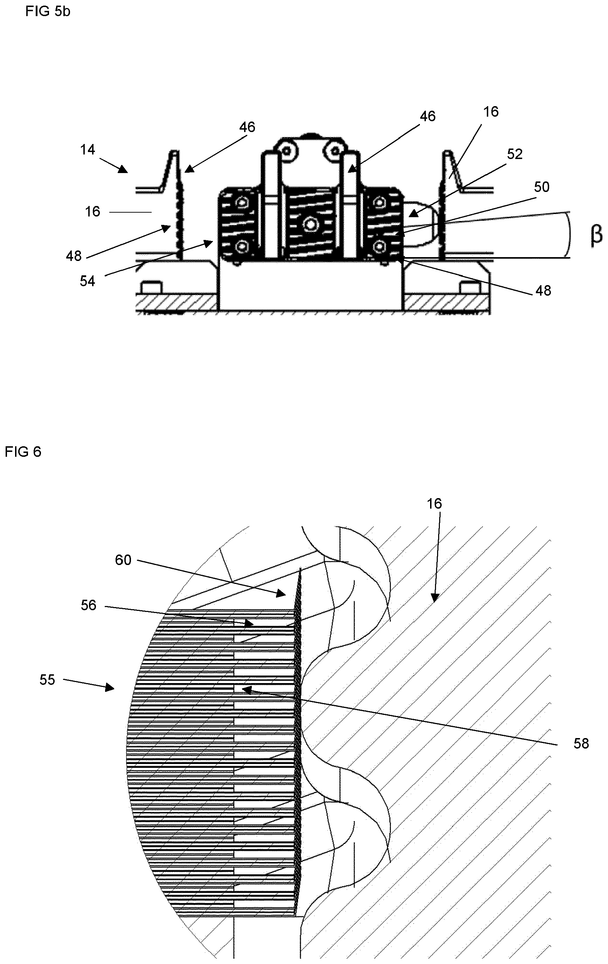

In Zusammenhang mit Fig. 5a und 5b soll genauer auf die Ausgestaltung der Positionierfläche 45 der jeweiligen Positioniereinheit 14 eingegangen werden.

Wie aus Fig. 5a ersichtlich, ist die Oberfläche des ersten Positionierflächenteilbereichs 46 in einem vorbestimmten Winkel geneigt zu der Hochrichtung der Vorrichtung 10 angeordnet. Mit anderen Worten kann die Oberfläche des ersten Positionierflächenteilbereichs 46 schräg, insbesondere in dem Winkel, zu der Hochrichtung der Vorrichtung 10 angeordnet sein. Mit anderen Worten kann die Oberfläche 46 des ersten Positionierflächenteilbereichs 46 eine Schräge oder steile Ebene aufweisen. Beispielsweise kann die Oberfläche des ersten Positionierflächenteilbereichs 46 in einem Winkel zwischen 5° und 90°, bevorzugt zwischen 5° und 45°, besonders bevorzugt zwischen 5° und 30° zu der Hochrichtung der Vorrichtung angeordnet oder ausgerichtet sein. Insbesondere ist ein Winkel α zwischen zwei sich gegenüberliegenden ersten Positionierflächenteilbereichen 46 ausgebildet. Beispielsweise kann der Winkel α zwischen 5° und 90°, bevorzugt zwischen 5° und 45°, besonders bevorzugt zwischen 5° und 30° betragen. Die Schräge jedes ersten Positionierflächenteilbereichs 46 ist bei jeder der Positioniereinheiten 14.1, 14.2, 14.3, 14.4 gleich ausgebildet. Durch die angeschrägten ersten Positionierflächenteilbereiche 46 ist zusammen insbesondere eine Trichterform gebildet. Durch die ersten Positionierflächenteilbereiche 46 können die Zellverbünde vorpositioniert werden oder in den Aufnahmebereich gleiten, in dem die Zellverbünde ausgerichtet oder zentriert werden.

Wie aus Fig. 5b ersichtlich, verlaufen die Nuten 50 des zweiten Positionierflächenteilbereichs 48 in einem vorbestimmten Abstand parallel zueinander. Hierbei verlaufen die Nuten 50 in einem vorbestimmten Winkel β von einem Endbereich 52 der Positionierbacke 16 zu einem gegenüberliegenden Endbereich 54 der Positionierbacke 16. Mit anderen Worten können die Nuten 50 von schräg oben nach schräg unten oder von oben nach unten schräg verlaufen. Dabei sind die Nuten 50 in dem vorbestimmten Winkel β zu einer Transversalebene der Positioniereinheit 14 oder der Vorrichtung 10 angeordnet. Mit "Transversalebene" ist insbesondere eine quer liegende Ebene rechtwinklig zu einer Längsachse oder Hochrichtung der Vorrichtung 10 oder der Positionierbacke gemeint. Die Transversalebene kann auch als Horizontalebene bezeichnet werden.

Vergleicht man Fig. 5a mit Fig. 5b, so ist daraus ersichtlich, dass der erste Positionierflächenteilbereich 46 in die Hochrichtung der Vorrichtung 10 über dem zweiten Positionierflächenteilbereich 48 angeordnet ist. Mit anderen Worten können der erste Positionierflächenteilbereich 46 und der zweite Positionierflächenteilbereich 48 aneinander und übereinander angeordnet sein. Im oberen Bereich sind die Positionierbacken 16 mit einer glatten Oberfläche und dem vorbestimmten Winkel α ausgebildet. Dadurch wird erreicht, dass beim Übereinanderlegen der einzelnen Zellverbünde eine gewisse Vorpositionierung erfolgt. Im unteren Bereich der Positionierbacken 16 sind die Nuten 50 erkennbar, die unter dem Winkel β ausgeführt sind. Durch zweiten Positionierflächenteilbereich 48 und/oder den Winkel β der Nuten 50 oder die Ausrichtung der Nuten 50 in dem Winkel β wird sichergestellt, dass die elektrisch isolierenden Elemente in einer vertikalen Linie, also in Hochrichtung der Vorrichtung 10, umklappen. Auf den Umklappprozess wird im Zusammenhang mit Fig. 6 näher eingegangen.

In Fig. 6 befinden sich die Zellverbünde 55 zwischen den Positionierbacken 16. Wie einleitend bereits erläutert, weisen die Zellverbünde 55 mehrere elektrisch leitfähige Elemente, insbesondere zwei elektrisch leitfähige Elemente, auf. Dabei weisen die Zellverbünde 55 als elektrisch leitende Elemente eine oder mehrere Anoden 56 und Kathoden 58 auf. Zwischen den Anoden 56 und Kathoden 58 ist jeweils ein elektrisch isolierendes Element, also ein Separator 60, angeordnet. Die Anoden 56 und Kathoden 58 sowie die Separatoren 60 sind flächig oder als plattenförmiges Element oder Platte ausgebildet. Dabei sind aufeinanderfolgend entweder ein Separator 60, eine Anode 56, ein Separator 60 und eine Kathode 58 oder ein Separator 60, eine Kathode 58, ein Separator 60 angeordnet.

Dabei weist die Anode 56 eine größere Fläche auf als die Kathode 58. Ferner sind die Separatoren 60, insbesondere umlaufend, größer ausgebildet als das größere elektrisch leitfähige Element, also die Anode 56. Mit anderen Worten kann eine Fläche des Separators 60 größer ausgebildet sein als das größere elektrisch leitfähige Element, also die Anode 56. Dabei ist also eine Fläche des Separators 60 größer eine Fläche der Anode 56. Dabei steht ein Randbereich des Separators 60 über die Anode 56, insbesondere umlaufend, hinaus. Zudem ist die Anode 56 steifer als die Kathode 58 und steifer als der Separator 60 ausgebildet.

Die Separatoren 60 sind in die Hochrichtung der Vorrichtung 10 unter der Anode 56 angeordnet. Eine Fläche des Separators 60 steht über eine Fläche der Anode 56, insbesondere umlaufend, hinaus. Durch das Bewegen der Positioniereinheiten 14 und einem, insbesondere gleichzeitigem, Absenken des Trägers 34 mit den darauf angeordneten Zellverbünden 55, werden die Zellverbünde 55 an den sich seitlich befindenden Positioniereinheiten 14 oder Positionierbacken 16 vorbei bewegt. Durch diese Bewegung werden die jeweiligen Separatoren 60, insbesondere der überstehende Randbereich der Separatoren 60, nach oben geklappt.

Die Positionierbacken 16 sind also so angeordnet, dass während der Bewegung der Zellverbünde 55 die Separatoren 60 so umgeklappt oder der überstehende Teil der Separatoren 60 so umgebogen werden, dass die Separatoren 60 jeweils an der Anode 56 anliegen. Mit anderen Worten sind die Positionierbacken 16 so ausgeführt, dass diese den überragenden oder überstehenden Separator 60 definiert nach oben stellen und dieser somit an der Anode 56 anliegt. Zusätzlich oder alternativ sind die Positionierbacken 16 so angeordnet, dass während der Bewegung der Zellverbünde 55 die Separatoren 60 derart umgeklappt werden, dass die Separatoren 60 jeweils einer Innenseite der Positionierbacken 16 anliegen.

Durch das Vibrieren der Positionierbacken 16 und das gleichzeitige Absenken der zweiten Bewegungseinheit 30 oder des Trägers 34 werden die einzelnen Zellverbünde 55 an den sich seitlich befindenden Positionierbacken 16 vorbei bewegt. Durch diese Bewegung wird der Separator 60 nach oben geklappt. Die Positionierbacken 16 werden so gestaltet, dass durch schräg die ausgeprägten Nuten 50 in den Positionierbacken 16 ein ständiges Berühren der Anode 56 stattfindet. Somit legen sich die Separatoren 60 an der darüber liegenden Anode 56 an und bringen so die Anode 56 in eine genaue Position, wodurch insbesondere die Zellverbünde 55 zwischen den Positioniereinheiten 14 zentriert werden.

Nachdem die Anode 56 einerseits größer als die Katode 58 ist, und andererseits eine höhere Eigensteifigkeit als der Separator 60 aufweist, wird der Separator 60 oder die jeweiligen Separatoren 60 als Ausrichtelement für den gesamten Zellstapel oder die Zellverbünde 55 verwendet. Dabei werden die einzelnen Zellverbünde 55 in der Vorrichtung 10 grob übereinandergelegt. Durch das anschließende Rüttelverfahren, also das Bewegen der Positioniereinheiten 14, und Absenken des Trägers 34 mit den Zellverbünden 55 zwischen die schräg zulaufenden Positionierbacken 16 werden alle Schichten oder Zellverbünde über die einzelnen Nuten 50 zueinander positioniert.

Sobald alle Zellverbünde 55 abgesenkt wurden, ist der Separator 60 oder sind die Randbereiche der Separatoren 60 zwischen den Positionierbacken 16 und den Zellverbünden 55 angeordnet.

Nach dem Absenken der Zellverbünde 55 und/oder vor dem Entnehmen des Zellstapels werden die Zellverbünde 55 oder wird der Zellstapel, insbesondere formschlüssig oder stoffschlüssig, besonders bevorzugt durch Kleben oder Laminieren oder mittels einer Klemmplatte, fixiert.

Nach dem Fixieren des Zellstapels werden die Positioniereinheiten 14 geöffnet und der Zellstapel beispielsweise mit einer Fixierung auf der Trägerplatte wird aus der Vorrichtung 10 entnommen. Beispielsweise kann der Zellstapel mittels eines Greifers entnommen werden.

Im Folgenden wird noch ein konkretes Ausführungsbeispiel beschrieben:
Die Ausrichtung der einzelnen Zellverbünde oder auch Lagen erfolgt über die Mitte. Alle einzelnen Zellverbünde oder auch Lagen werden zueinander zentrisch ausgerichtet. Dies wird durch bewegliche Positionierbacken 16 auf allen 4 Seiten des Zellstapels, sowie durch einen, von den Positionierbacken 16 entkoppelten, Träger 34 erreicht. Der Träger 34, auf der die Zellverbünde und/oder Lagen aufgestapelt werden, schwingt nicht. Um eine Ausrichtung über die Mitte zu erreichen, werden die einzelnen Zellverbünde und/oder Lagen in allen 4 Richtungen, insbesondere in der Ebene, zueinander verschoben. Die Bewegung der Positionierbacken 16 und deren Abstand zueinander kann dabei immer spezifisch auf die Abmessungen der Eingangsmaterialien, also insbesondere die Zellverbünde und/oder Lagen, abgestimmt werden. Dadurch gelingt es insbesondere eine Zentrierung über die Mitte alle Zellverbünde und/oder Lagen zu erreichen, obwohl die Bauteile, also die Kathode, der Separator und die Anode, unterschiedlich groß sind. Mit "Eingangsmaterial" ist also das Material zur Zellstapelherstellung, also die Lagen und/oder Zellverbünde oder Laminate gemeint.

Das Verfahren erfolgt dabei unabhängig von der Schwerkraft.

Insgesamt ist durch die Erfindung eine Vorrichtung zum Stapeln von laminierten oder geklebten Zellstacks oder Zellverbünden zu einem Zellstapel beschrieben.

Aus einem vorhergehenden Arbeitsprozess werden Elektroden mit einem durchgängigen Separator zu einem Elektrodenband verbunden. Die Verbindung wird entweder durch einen Laminiervorgang oder durch Verkleben hergestellt. Der Separator wird im nächsten Arbeitsprozess zwischen den Elektrodenstapeln getrennt, so dass lose Zellverbünde, bestehend aus einem oder zwei Elektroden-Sheets und einem oder zwei Separatoren, hergestellt werden. Diese losen Zellverbünde müssen sehr genau zu einem kompletten Zellstapel aufgestapelt werden.

Der Gedanke basiert auf der Überlegung, dass die einzelnen Zellverbünde lediglich grob positioniert übereinandergelegt werden. Anschließend werden die einzelnen Lagen an Zellverbünden oder der Zellverbünde durch Vibrationen und eine gleichzeitige Absenkbewegung in seitlich angebrachte Positionierbacken der Vorrichtung übereinander zentriert. Dabei sind die Positionierbacken so ausgeführt, dass diese den überragenden Separator definiert nach oben stellen und dieser somit an der Anode anliegt. Nachdem die Anode eine gewisse Eigensteifigkeit aufweist und größer als die Kathode ist, richten sich alle einzelnen Zellstacks oder Zellverbünde über die Anoden genau aus.

Die Vorrichtung umfasst mehrere Baugruppen. Die Baugruppen umfassen ein Grundgestell, eine Vibrationsplatte, Formatteile und eine Hebegruppe. Das Grundgestell, welches auch als Grundkörper bezeichnet werden kann, wird fest am Maschinentisch verschraubt. Die Vibrationsplatte, welche auch als Bewegungsplatte bezeichnet wird, sitzt auf Gummilagern und wird von einem Vibrationsmotor in Schwingung gesetzt. Die Formatteile, welche auch als Positioniereinheiten bezeichnet werden, können je nach Zellformat ausgewechselt und/oder verstellt werden. Bei den Positioniereinheiten findet ein genaues Positionieren auf der Vibrationsplatte statt. Die Positionierung wird mittels eines Stifts, der fest in der Sohle sitzt, sowie einer Passfeder, die fest in der Vibrationsplatte gehalten ist, realisiert.

Auf der Hebegruppe, welche auch als zweite Bewegungseinheit bezeichnet wird, sitzt der Träger oder Werkstückträger. Die komplette Hebegruppe ist auf Gummilagern gelagert und wird somit von den Schwingungen des Vibrationsmotors entkoppelt.

Die Hebegruppe wird mittels einer Kugelumlaufspindel während des Vibrierens der Positionierbacken der Positioniereinheiten nach unten gefahren. Je nach Abmessungen, Anzahl und Eigenschaften des Zellstacks oder der Zellverbünde kann über diese Achse der Verfahrweg und die Achsgeschwindigkeit variiert werden.

Der Werkstückträger samt Zellstack oder Zellverbünden befindet sich in der Vorrichtung. In dieser Stellung, der Ausrichtposition, sind die einzelnen Lagen der Zellverbünde oder Zellstacks definiert übereinander und/oder aneinander positioniert.

Um den kompletten Zellstapel oder die Zellverbünde nach dem Ausrichten in der unteren Position aus der Vorrichtung zu entnehmen, müssen die Ausrichtbacken vom Werkstückträger weggefahren werden. Hierfür muss ein Exzenterspannhebel umgelegt werden. Eine Druckfeder sorgt dafür, dass die Ausrichtbacken beim Zustellen immer auf einen Festanschlag gedrückt werden. Somit wird eine definierte Lage der Backen sichergestellt. Die Einstellung als Festanschlag wird mittels einer Mikrometer-Schraube vorgenommen.

Durch das Vibrieren der Positionierbacken der Positioniereinheiten und gleichzeitigem Absenken der Hebegruppe und des Werkstückträgers werden die einzelnen Zellverbünde an den, sich seitlich befindenden, Positionierbacken vorbei bewegt. Durch diese Bewegung wird der Separator nach oben geklappt.

Die Positionierbacken werden so gestaltet, dass durch schräg ausgeprägte Nuten in den Backen ein ständiges Berühren der Anode stattfindet. Somit legen sich die Separatoren an der darüberlegenden Anode an und bringen die Anoden so in eine genaue Position.

Im oberen Bereich sind die Positionierbacken mit einer glatten Oberfläche und einem Winkel (α) ausgeführt. Dadurch wird erreicht, dass beim Übereinanderlegen der einzelnen Zellverbünde eine gewisse Vorpositionierung erfolgt. Im unteren Bereich sind die Nuten erkennbar, die ebenfalls unter einem Winkel (β) ausgeführt sind. Durch den Winkel der Nuten wird sichergestellt, dass beim Umklappen des Separators die einzelnen übereinanderliegenden Separatoren in einer vertikalen Linie Kontakt mit den Positionierbacken haben.

Voraussetzung für die Anwendung dieses Rüttelverfahrens ist das Laminieren oder Kleben von jeweils mindestens einer Anode, einer Kathode und eines Separators. Nachdem die Anode einerseits größer als die Kathode ist, und andererseits eine höhere Eigensteifigkeit als der Separator aufweist, wird diese als Ausrichtelement für den gesamten Stack verwendet. Durch das Laminieren oder Kleben des Zellverbunds (Anode - Separator - Kathode - Separator) können mit Hilfe dieses Prozessschrittes beliebig viele Zellverbünde zueinander positioniert werden. Dabei werden die einzelnen Zellverbünde in der Vorrichtung grob übereinandergelegt. Dies kann zum Beispiel durch ein einfaches Pick- und Place-Handling erfolgen. Durch das anschließende Rüttelverfahren und Absenken zwischen die schräg zulaufenden Positionierbacken werden alles Schichten über die einzelnen Anoden zueinander positioniert. Nachfolgend wird Zellstapel in der Vorrichtung mit Hilfe einer zweiteiligen Kassette geklemmt und behält somit die Lage jeder einzelnen Schicht.

### Bezugszeichenliste:

- 10: Vorrichtung
- 12: Grundkörper
- 14: Positioniereinheiten
- 14.1: erste Positioniereinheit
- 14.2: zweite Positioniereinheit
- 14.3: dritte Positioniereinheit
- 14.4: vierte Positioniereinheit
- 16: Positionierbacke
- 18: Bewegungsplatte
- 20: Lager
- 22: Befestigungseinrichtung
- 24: Federelement
- 26: Stift
- 28: Sohle
- 30: zweite Bewegungseinheit
- 32: Zwischenstück
- 34: Träger
- 36: Kugelumlaufspindel
- 37: Aktor
- 38: Einstelleinrichtung
- 40: Exzenterspannhebel
- 42: weiteres Federelement
- 44: Justierschraube
- 45: Positionierfläche
- 46: erster Positionierflächenteilbereich
- 48: zweiter Positionierflächenteilbereich
- 50: Nuten
- 52: Endbereich
- 54: Endbereich
- 55: Zellverbünde
- 56: Anoden
- 58: Kathode
- 60: Separator

## Patentansprüche

1. Vorrichtung (10) zum Herstellen eines Zellstapels, welcher eine Mehrzahl an Zellverbünden (55) und/oder Lagen aufweist, umfassend:
- mehrere Positioniereinheiten (14), welche dazu eingerichtet sind, die Mehrzahl an Zellverbünden (55) und/oder Lagen aufzunehmen, wobei
- die Positioniereinheiten (14) jeweils eine Positionierbacke (16) umfassen, wobei die Positionierbacken (16) dazu eingerichtet sind, die Mehrzahl an übereinander angeordneten Zellverbünden (55) und/oder Lagen einzufassen;
- eine erste Bewegungseinheit, welche dazu eingerichtet ist, die Positioniereinheiten (14) zu bewegen, wobei
- die erste Bewegungseinheit eine Bewegungsplatte (18), welche beweglich gelagert ist, und einen Aktor (37) umfasst, wobei die Positioniereinheiten (14) an der Bewegungsplatte (18) angeordnet sind, wobei der Aktor (37) dazu eingerichtet ist, die Bewegungsplatte (18) zu bewegen, insbesondere in Schwingung zu versetzen, wobei
- die Positioniereinheiten (14) derart angeordnet sind, dass durch die von der ersten Bewegungseinheit initiierte Bewegung die einzelnen Zellverbünde (55) und/oder Lagen mittig zwischen den Positionierbacken (16) zentriert werden, und
- einen Träger (34), wobei die Mehrzahl an Zellverbünden (55) und/oder Lagen auf dem Träger (34) aufliegen, wobei der Träger (34) von der Bewegung der ersten Bewegungseinheit entkoppelt ist.

2. Vorrichtung (10) nach Anspruch 1,
**dadurch gekennzeichnet, dass**
die Positioniereinheiten (14), insbesondere die Positionierbacken (16),
2.1 dazu eingerichtet sind, eine Zustellbewegung, insbesondere auf die Mehrzahl an Zellverbünden (55) und/oder Lagen zu, auszuführen; und/oder
2.2 einzeln oder paarweise durch die erste Bewegungseinheit bewegbar sind.

3. Vorrichtung (10) nach Anspruch 1 oder 2,
**dadurch gekennzeichnet, dass**
die Positioniereinheiten (14) an der Bewegungsplatte (18), insbesondere formschlüssig, mittels einer Befestigungseinrichtung (22) befestigt und/oder positionierbar sind, wobei die Befestigungseinrichtung (22) zumindest ein Befestigungselement, insbesondere einen Stift (26) oder eine Schraube oder einen Bolzen, und/oder ein Federelement, insbesondere eine Passfeder (24), umfasst, wobei die jeweilige Positioniereinheit (14) mittels des zumindest einen Befestigungselements und/oder des Federelements an der Bewegungsplatte (18) befestigt und/oder positionierbar ist.

4. Vorrichtung (10) nach einem der vorhergehenden Ansprüche,
**dadurch gekennzeichnet, dass**
die Positionierbacken (16) der Positioniereinheiten (14), insbesondere an einer Innenseite, jeweils eine Positionierfläche (45) aufweisen, wobei die Positionierfläche (45) in zumindest zwei Positionierflächenteilbereiche (46; 48) unterteilt ist, wobei ein erster Positionierflächenteilbereich (46) eine glatte Oberfläche aufweist und ein zweiter Positionierflächenteilbereich (48) Nuten aufweist.

5. Vorrichtung (10) nach Anspruch 4,
**dadurch gekennzeichnet, dass**
5.1 die Oberfläche des ersten Positionierflächenteilbereichs (46) in einem vorbestimmten Winkel geneigt zu der Hochrichtung der Vorrichtung (10) ausgebildet ist und/oder
5.2 die Nuten (50) des zweiten Positionierflächenteilbereichs (48) in einem vorbestimmten Abstand, insbesondere parallel zueinander, und in einem vorbestimmten Winkel (β), insbesondere zu einer Transversalebene der Positioniereinheit (14), von einem Endbereich (52) der Positionierbacke (16) zu einem gegenüberliegenden Endbereich (54) der Positionierbacke (16) verlaufen und/oder
5.3 der erste Positionierflächenteilbereich (46) in Hochrichtung der Vorrichtung (10), insbesondere zu einer Vorpositionierung der Mehrzahl an Zellverbünden (55) und/oder Lagen, über dem zweiten Positionierflächenteilbereich (48) angeordnet ist.

6. Vorrichtung (10) nach Anspruch 4 oder 5,
**dadurch gekennzeichnet, dass**
die Vorrichtung (10) vier Positioniereinheiten (14.1; 14.2; 14.3; 14.4) aufweist, wobei jeweils zwei Positioniereinheiten einander gegenüberliegend angeordnet und die Positionierflächen (45) der Positioniereinheiten (14.1; 14.2; 14.3; 14.4) einander zugewandt sind.

7. Vorrichtung (10) nach einem der vorhergehenden Ansprüche,
**dadurch gekennzeichnet, dass**
die Vorrichtung (10)
7.1 eine zweite Bewegungseinheit (30) umfasst, welche an dem Träger (34) angeordnet ist, wobei die zweite Bewegungseinheit (30), welche insbesondere eine Kugelumlaufspindel (36) aufweist, dazu eingerichtet ist, den Träger (34) in eine Hochrichtung der Vorrichtung (10), insbesondere beim Bewegen der Positioniereinheiten (14), zu bewegen; und/oder
7.2 zumindest eine Luftdüse umfasst, welche dazu eingerichtet ist, einen Luftstrom bereitzustellen, wobei die Luftdüse durch den Luftstrom dazu eingerichtet ist, die Zellverbünde und/oder Lagen, insbesondere bei der Zentrierung zwischen den Positioniereinheiten (14) und/oder bei der Bewegung der Positioniereinheiten (14), auszurichten.

8. Vorrichtung (10) nach Anspruch 7,
**dadurch gekennzeichnet, dass**
die Vorrichtung einen Grundkörper (12) umfasst, wobei der Träger (34) und/oder die Positioniereinheiten (14) und/oder die erste Bewegungseinheit und/oder die zweite Bewegungseinheit (30) an dem Grundkörper (12) angeordnet sind.

9. Vorrichtung (10) nach einem der vorhergehenden Ansprüche,
**dadurch gekennzeichnet, dass**
die Zellverbünde (55) und/oder Lagen jeweils aufeinander und aneinander angeordnet zumindest zwei elektrisch leitfähige Elemente (56; 58) und zwei elektrisch isolierende Elemente (60) umfassen, wobei eines der beiden elektrisch leitfähigen Elemente (56; 58), insbesondere umlaufend, größer und/oder steifer ausgebildet ist als das andere elektrisch leitfähige Element (56; 58), wobei die elektrisch isolierenden Elemente (60), insbesondere umlaufend, größer ausgebildet sind, als das größere elektrisch leitfähige Element (56; 58) und wobei die Steifigkeit der elektrisch isolierenden Elemente geringer ist als die Steifigkeit zumindest eines der elektrisch leitfähigen Elemente.

10. Verfahren zum Betreiben einer Vorrichtung (10) zum Herstellen eines Zellstapels, welcher eine Mehrzahl an Zellverbünden (55) und/oder Lagen aufweist, wobei die Vorrichtung (10) eine oder mehrere Positioniereinheiten (14) umfasst, welche dazu eingerichtet sind, die Mehrzahl an Zellverbünden (55) und/oder Lagen aufzunehmen, wobei die Positioniereinheiten (14) jeweils eine Positionierbacke (16) umfassen, wobei die Positionierbacken (16) dazu eingerichtet sind, die Mehrzahl an übereinander angeordneten Zellverbünden (55) und/oder Lagen einzufassen, wobei die Vorrichtung (10) ferner eine erste Bewegungseinheit aufweist, welche dazu eingerichtet ist, die Positioniereinheiten (14) zu bewegen, wobei die erste Bewegungseinheit eine Bewegungsplatte (18), welche beweglich gelagert ist, und einen Aktor (37) umfasst, wobei die Positioniereinheiten (14) an der Bewegungsplatte (18) angeordnet sind, wobei der Aktor (37) dazu eingerichtet ist, die Bewegungsplatte (18) zu bewegen, insbesondere in Schwingung zu versetzen, wobei die Vorrichtung (10) einen Träger (34) aufweist, wobei die Mehrzahl an Zellverbünden (55) und/oder Lagen auf dem Träger (34) aufliegen, wobei der Träger (34) von der Bewegung der ersten Bewegungseinheit entkoppelt ist, umfassend die Schritte:
- Anordnen der Mehrzahl an Zellverbünden (55) und/oder Lagen, insbesondere in eine Hochrichtung der Vorrichtung (10), auf dem Träger (34) übereinander;
- Bewegen der ersten Bewegungseinheit, sodass die Mehrzahl der übereinander angeordneten Zellverbünde (55) mittig zwischen den die Zellverbünde (55) und/oder Lagen einfassenden Positionierbacken (16) zentriert wird.

11. Verfahren nach Anspruch 10,
**dadurch gekennzeichnet, dass**
die Vorrichtung (10) ferner eine zweite Bewegungseinheit (30) aufweist, wobei die zweite Bewegungseinheit (30) an dem Träger (34) angeordnet ist, wobei die zweite Bewegungseinheit (30) den Träger (34) in die Hochrichtung der Vorrichtung (10) beim Bewegen der Positioniereinheiten (14) zum Zentrieren der Zellverbünde (55) und/oder Lagen absenkt.

12. Verfahren nach Anspruch 10 oder 11,
**dadurch gekennzeichnet, dass**
die Zellverbünde (55) und/oder Lagen jeweils aufeinander und aneinander angeordnet zumindest zwei elektrisch leitfähige Elemente (56; 58) und zwei elektrisch isolierende Elemente (60) umfassen, wobei die elektrisch isolierenden Elemente (60) während der Bewegung der Zellverbünde (55) und/oder Lagen zumindest teilweise in die Hochrichtung der Vorrichtung (10) umgeklappt werden.

13. Verfahren nach Anspruch 12,
**dadurch gekennzeichnet, dass**
die Positionierbacken (16) derart angeordnet sind, dass während der Bewegung der Zellverbünde (55) und/oder Lagen die elektrisch isolierenden Elemente (60) derart umgeklappt werden, dass die elektrisch isolierenden Elemente (60) jeweils an einem der elektrisch leitfähigen Elemente (56; 58) und/oder einer Innenseite der Positionierbacken (16) anliegen.

14. Verfahren nach einem der Ansprüche 10 bis 13,
**dadurch gekennzeichnet, dass**
vor einem Entnehmen des Zellstapels, der Zellstapel, insbesondere formschlüssig oder stoffschlüssig, besonders bevorzugt durch Kleben oder Laminieren oder mittels einer Klemmung beispielsweise durch eine Klemmplatte, fixiert wird.

15. Verfahren nach Anspruch 14,
**dadurch gekennzeichnet, dass**
nach dem Fixieren des Zellstapels die Positioniereinheiten (14) geöffnet und der Zellstapel, insbesondere samt Fixierung, aus der Vorrichtung (10) entnommen wird.

## Claims

1. Device (10) for producing a cell stack having a plurality of cell composites (55) and/or layers, comprising:
- a plurality of positioning units (14) adapted to receive said plurality of cell composites (55) and/or layers, wherein
- the positioning units (14) each comprising a positioning jaw (16), the positioning jaws (16) being adapted to frame the plurality of cell composites (55) and/or layers arranged one above the other;
- a first movement unit adapted to move the positioning units (14), wherein
- the first movement unit comprises a movement plate (18), which is movably supported, and an actuator (37), wherein the positioning units (14) are arranged on the movement plate (18), wherein the actuator (37) is arranged to move the movement plate (18), in particular to set it in oscillation, wherein
- the positioning units (14) are arranged in such a way that the movement initiated by the first movement unit centers the individual cell composites (55) and/or layers centrally between the positioning jaws (16), and
- a support (34), wherein the plurality of cell composites (55) and/or layers rest on the support (34), wherein the support (34) is decoupled from the movement of the first movement unit.

2. Device (10) according to claim 1,
**characterized in that**
the positioning units (14), in particular the positioning jaws (16),
2.1 are adapted to execute a feed movement, in particular towards the plurality of cell composites (55) and/or layers; and/or
2.2 are movable individually or in pairs by the first movement unit.

3. Device (10) according to claim 1 or 2,
**characterized in that**
the positioning units (14) are fastened and/or positionable on the movement plate (18), in particular in a form-fitting manner, by means of a fastening device (22), the fastening device (22) comprising at least one fastening element, in particular a pin (26) or a screw or a bolt, and/or a spring element, in particular a feather key (24), the respective positioning unit (14) being fastened and/or positionable on the movement plate (18) by means of the at least one fastening element and/or the spring element.

4. Device (10) according to any of the preceding claims,
**characterized in that**
the positioning jaws (16) of the positioning units (14) each have a positioning surface (45), in particular on an inner side, the positioning surface (45) being divided into at least two positioning surface subregions (46; 48), a first positioning surface subregion (46) having a smooth surface and a second positioning surface subregion (48) having grooves.

5. Device (10) according to claim 4,
**characterized in that**
5.1 the surface of the first positioning surface sub-region (46) is formed inclined at a predetermined angle to the upward direction of the device (10) and/or
5.2 the grooves (50) of the second positioning surface sub-region (48) run at a predetermined distance, in particular parallel to each other, and at a predetermined angle (β), in particular to a transverse plane of the positioning unit (14), from one end area (52) of the positioning jaw (16) to an opposite end area (54) of the positioning jaw (16) and/or
5.3 the first positioning surface sub-region (46) is arranged above the second positioning surface sub-region (48) in the upward direction of the device (10), in particular for pre-positioning the plurality of cell composites (55) and/or layers.

6. Device (10) according to claim 4 or 5,
**characterized in that**
the device (10) has four positioning units (14.1; 14.2; 14.3; 14.4), two positioning units in each case being arranged opposite one another and the positioning surfaces (45) of the positioning units (14.1; 14.2; 14.3; 14.4) facing one another.

7. Device (10) according to one of the preceding claims,
**characterized in that**
the device (10)
7.1 comprises a second movement unit (30), which is arranged on the support (34), wherein the second movement unit (30), which in particular comprises a ball screw (36), is arranged to move the support (34) in an upward direction of the device (10), in particular when moving the positioning units (14); and/or
7.2 comprising at least one air nozzle, which is arranged to provide an air flow, wherein the air nozzle is adapted by the air flow to align the cell composites and/or layers, in particular when centering between the positioning units (14) and/or when moving the positioning units (14).

8. Device (10) according to claim 7,
**characterized in that**
the device comprises a base body (12), wherein the support (34) and/or the positioning units (14) and/or the first movement unit and/or the second movement unit (30) are arranged on the base body (12).

9. Device (10) according to any of the preceding claims,
**characterized in that**
the cell composites (55) and/or layers each comprise at least two electrically conductive elements (56; 58) and two electrically insulating elements (60) arranged on top of and against one another, wherein one of the two electrically conductive elements (56; 58), in particular circumferentially, is designed to be larger and/or stiffer than the other electrically conductive element (56; 58), wherein the electrically insulating elements (60), in particular circumferentially, are formed larger than the larger electrically conductive element (56; 58) and wherein the stiffness of the electrically insulating elements is lower than the stiffness of at least one of the electrically conductive elements.

10. Method of operating a device (10) for producing a cell stack having a plurality of cell composites (55) and/or layers, the device (10) comprising one or more positioning units (14) adapted to receive the plurality of cell composites (55) and/or layers, wherein the positioning units (14) each comprise a positioning jaw (16), wherein the positioning jaws (16) are adapted to frame the plurality of cell composites (55) and/or layers arranged one above the other, wherein the device (10) further comprises a first movement unit which is adapted to move the positioning units (14), the first movement unit comprising a movement plate (18), which is movably supported, and an actuator (37), the positioning units (14) being arranged on the movement plate (18), wherein the actuator (37) is adapted to move the movement plate (18), in particular set it in oscillation, the device (10) having a support (34), the plurality of cell composites (55) and/or layers resting on the support (34), the support (34) being decoupled from the movement of the first movement unit, the method comprising the steps of:
- arranging the plurality of cell composites (55) and/or layers, in particular in a vertical direction of the device (10), on top of each other on the support (34);
- moving the first movement unit so that the plurality of cell composites (55) arranged one on top of the other are centered between the positioning jaws (16) framing the cell composites (55) and/or layers.

11. Method according to claim 10,
**characterized in that**
the device (10) further comprises a second movement unit (30), the second movement unit (30) being arranged on the support (34), wherein the second movement unit (30) lowers the support (34) in the height direction of the device (10) when moving the positioning units (14) for centering the cell composites (55) and/or layers.

12. Method according to claim 10 or 11,
**characterized in that**
the cell composites (55) and/or layers each comprise at least two electrically conductive elements (56; 58) and two electrically insulating elements (60) arranged on top of and against each other, wherein the electrically insulating elements (60) are at least partially folded over in the height direction of the device (10) during the movement of the cell composites (55) and/or layers.

13. Method according to claim 12,
**characterized in that**
the positioning jaws (16) are arranged in such a way that during the movement of the cell composites (55) and/or layers, the electrically insulating elements (60) are folded over in such a way that the electrically insulating elements (60) each rest against one of the electrically conductive elements (56; 58) and/or an inner side of the positioning jaws (16).

14. Method according to any of claims 10 to 13,
**characterized in that**
prior to a removal of the cell stack, the cell stack is fixed, in particular in a form-fitting or material-fitting manner, particularly preferably by gluing or laminating or by means of a clamping, for example by a clamping plate.

15. Method according to claim 14,
**characterized in that**
after fixing the cell stack, the positioning units (14) are opened and the cell stack, in particular together with the fixing arrangement, is removed from the device (10).

## Revendications

1. Dispositif (10) pour la fabrication d'un empilement de cellules, qui présente une pluralité d'assemblages de cellules (55) et/ou de couches, comprenant:
- plusieurs unités de positionnement (14), qui sont conçues pour recevoir la pluralité d'assemblages de cellules (55) et/ou de couches, dans lequel
- les unités de positionnement (14) comprennent chacune une mâchoire de positionnement (16), les mâchoires de positionnement (16) étant adaptées pour entourer la pluralité d'assemblages de cellules (55) et/ou de couches superposés;
- une première unité de déplacement qui est adaptée pour déplacer les unités de positionnement (14), dans lequel
- la première unité de mouvement comprend une plaque de mouvement (18), qui est montée de manière mobile, et un actionneur (37), les unités de positionnement (14) étant disposées sur la plaque de mouvement (18), l'actionneur (37) étant conçu pour déplacer la plaque de mouvement (18), en particulier pour la faire vibrer, dans lequel
- les unités de positionnement (14) sont disposées de telle sorte que le mouvement initié par la première unité de mouvement permet de centrer les différents assemblages de cellules (55) et/ou les couches entre les mâchoires de positionnement (16), et
- un support (34), la pluralité d'assemblages de cellules (55) et/ou de couches reposant sur le support (34), le support (34) étant découplé du mouvement de la première unité de déplacement.

2. Dispositif (10) selon la revendication 1,
**caractérisé en ce que**
les unités de positionnement (14), notamment les mâchoires de positionnement (16),
2.1 sont agencées pour effectuer un mouvement d'approche, notamment vers la pluralité d'assemblages de cellules (55) et/ou de couches; et/ou
2.2 sont déplaçables individuellement ou par paire par la première unité de déplacement.

3. Dispositif (10) selon la revendication 1 ou 2,
**caractérisé en ce que**
les unités de positionnement (14) sont fixées et/ou peuvent être positionnées sur la plaque de mouvement (18), en particulier par complémentarité de formes, au moyen d'un dispositif de fixation (22), le dispositif de fixation (22) comprenant au moins un élément de fixation, en particulier une tige (26) ou une vis ou un boulon, et/ou un élément de ressort, en particulier une clavette (24), l'unité de positionnement (14) respective étant fixée et/ou pouvant être positionnée sur la plaque de mouvement (18) par au moins un élément de fixation et/ou l'élément de ressort.

4. Dispositif (10) selon l'une des revendications précédentes,
**caractérisé en ce que**
les mâchoires de positionnement (16) des unités de positionnement (14) présentent chacune, notamment sur une face intérieure, une surface de positionnement (45), la surface de positionnement (45) étant divisée en au moins deux zones partielles de surface de positionnement (46; 48), une première zone partielle de surface de positionnement (46) présentant une surface lisse et une deuxième zone partielle de surface de positionnement (48) présentant des rainures.

5. Dispositif (10) selon la revendication 4,
**caractérisé en ce que**
5.1 la surface de la première partie de surface de positionnement (46) est formée selon un angle prédéterminé incliné par rapport à la direction verticale du dispositif (10) et/ou
5.2 les rainures (50) de la deuxième zone partielle de surface de positionnement (48) s'étendent à une distance prédéterminée, en particulier parallèlement les unes aux autres, et selon un angle prédéterminé (β), en particulier par rapport à un plan transversal de l'unité de positionnement (14), d'une zone d'extrémité (52) de la mâchoire de positionnement (16) à une zone d'extrémité opposée (54) de la mâchoire de positionnement (16) et/ou
5.3 la première partie de surface de positionnement (46) est disposée au-dessus de la deuxième partie de surface de positionnement (48) dans la direction verticale du dispositif (10), en particulier pour un pré-positionnement de la pluralité d'assemblages de cellules (55) et/ou de couches.

6. Dispositif (10) selon la revendication 4 ou 5,
**caractérisé en ce que**
le dispositif (10) présente quatre unités de positionnement (14.1; 14.2; 14.3; 14.4), deux unités de positionnement étant respectivement disposées en face l'une de l'autre et les surfaces de positionnement (45) des unités de positionnement (14.1; 14.2; 14.3; 14.4) étant tournées l'une vers l'autre.

7. Dispositif (10) selon l'une des revendications précédentes,
**caractérisé en ce que**
le dispositif (10)
7.1 comprend une deuxième unité de déplacement (30) disposée sur le support (34), la deuxième unité de déplacement (30), qui comprend notamment une vis à billes (36), étant adaptée pour déplacer le support (34) dans une direction haute du dispositif (10), notamment lors du déplacement des unités de positionnement (14); et/ou
7.2 comprend au moins une buse d'air agencée pour fournir un flux d'air, la buse d'air étant agencée par le flux d'air pour orienter les assemblages de cellules et/ou les couches, notamment lors du centrage entre les unités de positionnement (14) et/ou lors du déplacement des unités de positionnement (14).

8. Dispositif (10) selon la revendication 7,
**caractérisé en ce que**
le dispositif comprend un corps de base (12), le support (34) et/ou les unités de positionnement (14) et/ou la première unité de déplacement et/ou la deuxième unité de déplacement (30) étant disposés sur le corps de base (12).

9. Dispositif (10) selon l'une quelconque des revendications précédentes,
**caractérisé en ce que**
les assemblages de cellules (55) et/ou les couches comprennent respectivement, disposés les uns sur les autres et les uns contre les autres, au moins deux éléments électriquement conducteurs (56; 58) et deux éléments électriquement isolants (60), l'un des deux éléments électriquement conducteurs (56; 58), en particulier sur leur pourtour, étant plus grand et/ou plus rigide que l'autre élément électriquement conducteur (56; 58), les éléments électriquement isolants (60) étant réalisés plus grands, en particulier sur leur pourtour, que le plus grand élément électriquement conducteur (56; 58) et la rigidité des éléments électriquement isolants étant inférieure à la rigidité d'au moins un des éléments électriquement conducteurs.

10. Procédé de fonctionnement d'un dispositif (10) pour la fabrication d'un empilement de cellules qui présente une pluralité d'assemblages de cellules (55) et/ou de couches, le dispositif (10) comprenant une ou plusieurs unités de positionnement (14) qui sont conçues pour recevoir la pluralité d'assemblages de cellules (55) et/ou de couches, les unités de positionnement (14) comprenant chacune une mâchoire de positionnement (16), les mâchoires de positionnement (16) étant adaptées pour entourer la pluralité d'assemblages de cellules (55) et/ou de couches superposées, le dispositif (10) comprenant en outre une première unité de déplacement, qui est agencée pour déplacer les unités de positionnement (14), la première unité de déplacement comprenant une plaque de déplacement (18) qui est montée mobile et un actionneur (37), les unités de positionnement (14) étant disposées sur la plaque de déplacement (18), l'actionneur (37) étant agencé pour déplacer la plaque de mouvement (18), en particulier de la faire vibrer, le dispositif (10) présentant un support (34), la pluralité d'assemblages de cellules (55) et/ou de couches reposant sur le support (34), le support (34) étant découplé du mouvement de la première unité de mouvement, le procédé comprenant les étapes consistant à:
- disposer la pluralité d'assemblages de cellules (55) et/ou de couches, en particulier dans une direction verticale du dispositif (10), les unes au-dessus des autres sur le support (34);
- déplacer la première unité de déplacement de manière à centrer la pluralité d'assemblages de cellules (55) superposés entre les mâchoires de positionnement (16) enserrant les assemblages de cellules (55) et/ou les couches.

11. Procédé selon la revendication 10,
**caractérisé en ce que**
le dispositif (10) comprend en outre une deuxième unité de déplacement (30), la deuxième unité de déplacement (30) étant disposée sur le support (34), la deuxième unité de déplacement (30) abaissant le support (34) dans la direction verticale du dispositif (10) lors du déplacement des unités de positionnement (14) pour centrer les assemblages de cellules (55) et/ou les couches.

12. Procédé selon la revendication 10 ou 11,
**caractérisé en ce que**
les assemblages de cellules (55) et/ou les couches comprennent chacun, disposés les uns sur les autres et les uns contre les autres, au moins deux éléments électriquement conducteurs (56; 58) et deux éléments électriquement isolants (60),
les éléments électriquement isolants (60) étant au moins partiellement rabattus dans la direction verticale du dispositif (10) pendant le déplacement des assemblages de cellules (55) et/ou des couches.

13. Procédé selon la revendication 12,
**caractérisé en ce que**
les mâchoires de positionnement (16) sont disposées de telle sorte que, pendant le déplacement des assemblages de cellules (55) et/ou des couches, les éléments électriquement isolants (60) sont rabattus de telle sorte que les éléments électriquement isolants (60) sont respectivement en contact avec l'un des éléments électriquement conducteurs (56; 58) et/ou une face intérieure des mâchoires de positionnement (16).

14. Procédé selon l'une quelconque des revendications 10 à 13,
**caractérisé en ce que**
avant un prélèvement de l'empilement de cellules, l'empilement de cellules est fixé, en particulier par complémentarité de forme ou de matière, de manière particulièrement préférée par collage ou laminage ou au moyen d'un serrage, par exemple par une plaque de serrage.

15. Procédé selon la revendication 14,
**caractérisé en ce que**
après la fixation l'empilement de cellules, les unités de positionnement (14) sont ouvertes et l'empilement de cellules, en particulier avec la fixation, est retiré du dispositif (10).
